# EUROPEAN PATENT SPECIFICATION

(11) **EP 4 213 512 B1**
(45) Date of publication and mention of the grant of the patent: **04.03.2026**
(21) Application number: 21881805.2
(22) Date of filing: 22.09.2021
(51) Int. Cl.: H04W 4/70, G06F 3/14, H04W 76/15, H04N 21/41, H04N 21/4363, H04W 84/12, H04W 88/06, G09G 5/12

(54) **SCREEN PROJECTION METHOD AND SYSTEM, AND ELECTRONIC DEVICE**
BILDSCHIRMPROJEKTIONSVERFAHREN UND -SYSTEM SOWIE ELEKTRONISCHE VORRICHTUNG
PROCÉDÉ ET SYSTÈME DE PROJECTION D'ÉCRAN ET DISPOSITIF ÉLECTRONIQUE

(30) Priority: 21.10.2020 CN 202011134107
(43) Date of publication of application: 19.07.2023
(73) Proprietor: Huawei Technologies Co., Ltd., Shenzhen, Guangdong 518129 (CN)
(72) Inventor: ZHANG, Jinming, Shenzhen, Guangdong 518129 (CN); ZHOU, Ming, Shenzhen, Guangdong 518129 (CN)
(74) Representative: Maiwald GmbH
(86) International application number: PCT/CN2021/119685
(87) International publication number: WO 2022/083386

(56) References cited:
- EP-A1- 3 454 225
- WO-A1-2020/164475
- CN-A- 107 635 248
- CN-A- 107 908 386
- CN-A- 108 289 289
- CN-A- 109 587 667
- US-A1- 2017 094 670
- US-A1- 2017 094 670
- US-A1- 2017 272 317

## Description

This application claims priority to Chinese Patent Application No. 202011134107.7, filed with the China National Intellectual Property Administration on October 21, 2020 and entitled "SCREEN PROJECTION METHOD AND SYSTEM, AND ELECTRONIC DEVICE".

### TECHNICAL FIELD

Embodiments of this application relate to the field of terminal devices, and in particular, to a screen projection method and system, and an electronic device.

### BACKGROUND

CN107908386A describes an information processing method and electronic equipment. It is described that when being applied to first equipment, the information processing method comprises: respectively establishing wireless point-to-point connections with different second equipment on the basis of different communication addresses; acquiring screen projection contents of the first equipment; and sending the screen projection contents to the corresponding second equipment on the basis of the wireless point-to-point connections.

CN108289289A describes projection data transmission equipment, a projection data transmission system and a projection data transmission method, and belongs to the technical field of communication. It is described that the method comprises the steps of searching projection equipment within a wireless fidelity (wifi) connection range and a Bluetooth connection range; when two or more pieces of projection equipment are searched, separately building a wifi-direct session connection and/or a Bluetooth connection with each piece of searched projection equipment; acquiring video data in projection data, and transmitting the video data to the projection equipment with which the wifi-direct session connection is built via the wifi-direct session connection; and acquiring audio data in the projection data, and transmitting the audio data to the projection equipment with which the Bluetooth connection is connected via the Bluetooth connection.

With a growing quantity of applications, mobile phones can be applied to increasingly diverse scenarios. A user may perform projection to a large screen by using a mobile phone, to display a part of a screen or the entire screen of the mobile phone on the large screen.

However, in a process of screen projection between the mobile phone and the large screen, a packet loss may occur in a data transmission process due to network environment issues. As a result, because corresponding data is not received by the large screen, a problem such as freezing or erratic display may occur in the screen projection process, affecting user experience.

### SUMMARY

To resolve the foregoing technical problem, this application provides a screen projection method and system, and an electronic device. In the method, in a screen projection process, a first electronic device may establish two inter-frequency connections to a second electronic device, to improve reliability and stability of data transmission.

Appended claim 1 defines a screen projection method. Appended claim 10 defines an electronic device. The invention and its scope of protection is defined by these independent claims. The following aspects and implementations of the summary provide examples of combinations of technical subject matetrs.

According to a first aspect, an embodiment of this application provides a screen projection system. The system includes a first electronic device, a second electronic device, and a third electronic device. Specifically, the first electronic device exchanges data with the third electronic device through a first Wi-Fi connection, where the first Wi-Fi connection is established on a first channel in a first frequency band. It may also be understood that a frequency corresponding to the first Wi-Fi connection is the same as a frequency corresponding to the first channel in the first frequency band. After detecting a user operation, the first electronic device may establish the second Wi-Fi connection and the third Wi-Fi connection to the second electronic device in response to the detected user operation. The second Wi-Fi connection is established on a second channel in the first frequency band, the third Wi-Fi connection is established on a third channel in a second frequency band, the first frequency band is different from the second frequency band, and the first channel is different from the second channel. Then, after the first electronic device establishes the second Wi-Fi connection and the third Wi-Fi connection to the second electronic device, the first electronic device may perform a screen projection service with the second electronic device through the second Wi-Fi connection and the third Wi-Fi connection. In this way, when the first electronic device performs an Internet access service via the third electronic device, the first electronic device may perform the screen projection service through two inter-frequency connections between the first electronic device and the second electronic device. This improves reliability and stability of data transmission in a screen projection process, avoids occurrence of erratic display and freezing, and effectively improves user experience.

For example, the first Wi-Fi connection is in a 5 GHz frequency band, the second Wi-Fi connection is in the 5 GHz frequency band, and the third Wi-Fi connection is in a 2.4 GHz frequency band.

For example, the first Wi-Fi connection is in the 2.4 GHz frequency band, the second Wi-Fi connection is in the 2.4 GHz frequency band, and the third Wi-Fi connection is in the 5 GHz frequency band.

According to the first aspect, after establishing the second Wi-Fi connection to the second electronic device, the first electronic device performs the screen projection service with the second electronic device through the second Wi-Fi connection. Then, if communication quality of the second Wi-Fi connection between the first electronic device and the second electronic device does not meet a specified transmission condition, the first electronic device establishes the third Wi-Fi connection to the second electronic device. In this way, the first electronic device may establish a second connection path to the second electronic device under a specific condition, to reduce power consumption of the device.

According to any one of the first aspect or the implementations of the first aspect, the specified transmission condition includes at least one of the following: a transmission delay corresponding to the second Wi-Fi connection is less than a first threshold; and a packet loss rate corresponding to the second Wi-Fi connection is less than a second threshold. In this way, the first electronic device may establish the second connection path to the second electronic device when the data transmission delay and/or the packet loss rate do not meet an expectation, to reduce power consumption of the device, increase the data transmission delay, and reduce the packet loss rate.

According to any one of the first aspect or the implementations of the first aspect, the first electronic device may copy a data packet to generate two same data packets. For example, the first electronic device generates a first data packet and a second data packet, where the first data packet and the second data packet carry same data. The first electronic device may send the first data packet to the second electronic device through the second Wi-Fi connection, and send the second data packet to the second electronic device through the third Wi-Fi connection. In this way, the first electronic device may send the same data packet on the second Wi-Fi connection and the third Wi-Fi connection, to improve data transmission reliability through redundant transmission.

According to any one of the first aspect or the implementations of the first aspect, the second electronic device receives the first data packet at a first moment through the second Wi-Fi connection. The second electronic device receives the second data packet at a second moment through the third Wi-Fi connection. Then, the second electronic device may display, on a screen of the second electronic device, an image corresponding to the data carried in the first data packet, and discard the second data packet. In this way, the second electronic device may receive the same data on the two inter-frequency connections, which improves data receiving stability of the second electronic device.

For example, if the second electronic device does not receive the first data packet, the second electronic device may display, on the screen of the second electronic device, an image corresponding to the data carried in the second data packet.

According to any one of the first aspect or the implementations of the first aspect, the first electronic device may further generate a third data packet and a fourth data packet, where the third data packet and the fourth data packet carry same data. The first electronic device may send the third data packet to the second electronic device through the second Wi-Fi connection, and send the fourth data packet to the second electronic device through the third Wi-Fi connection.

According to any one of the first aspect or the implementations of the first aspect, the first data packet and the second data packet each carry a first number, the third data packet and the fourth data packet each carry a second number, and the first number and the second number are adjacent numbers. In this way, the second electronic device may discard one of the data packets based on the number carried in each of the data packets, after receiving the data packets with the same number; and after a data packet corresponding to a number is not received, obtain, from the other connection, a data packet that carries the number.

According to any one of the first aspect or the implementations of the first aspect, the first electronic device is further configured to: if it is detected that the second electronic device receives does not receive the first data packet and the second data packet, resend the first data packet to the second electronic device through the second Wi-Fi connection, and resend the second data packet to the second electronic device through the third Wi-Fi connection. In this way, during retransmission, the first electronic device only needs to transmit a data packet once on each of the two inter-frequency connections. This improves retransmission efficiency and air interface resource utilization.

According to any one of the first aspect or the implementations of the first aspect, the first electronic device is configured to display at least a part of an interface of the first electronic device on the second electronic device through the second Wi-Fi connection and the third Wi-Fi connection.

According to any one of the first aspect or the implementations of the first aspect, the first electronic device is a mobile phone, the second electronic device is Vision, and the third electronic device is an access point AP, a router, or a mobile phone.

According to any one of the first aspect or the implementations of the first aspect, the first electronic device exchanges data with the third electronic device through the first Wi-Fi connection and a fourth Wi-Fi connection, where the fourth Wi-Fi connection is established on a fourth channel in the second frequency band, and the third channel is different from the fourth channel; and the first electronic device is configured to disconnect the fourth Wi-Fi connection after establishing the second Wi-Fi connection and the third Wi-Fi connection to the second electronic device. In this way, when the first electronic device performs a dual-band Wi-Fi connection to the third electronic device, the first electronic device disconnects one Wi-Fi connection to the third electronic device to ensure reliability and stability of data transmission on a screen projection path.

According to any one of the first aspect or the implementations of the first aspect, the second electronic device exchanges data with the third electronic device through a fifth Wi-Fi connection, where the fifth Wi-Fi connection is established on a fifth channel in the first frequency band.

According to a second aspect, an embodiment of this application provides a screen projection method. The method is applied to a first electronic device. The method includes: The first electronic device establishes a second Wi-Fi connection and a third Wi-Fi connection to a second electronic device in response to a detected user operation in a process of data exchange with a third electronic device through a first Wi-Fi connection. The first Wi-Fi connection is established on a first channel in a first frequency band, the second Wi-Fi connection is established on a second channel in the first frequency band, and the third Wi-Fi connection is established on a third channel in a second frequency band. The first frequency band is different from the second frequency band, and the first channel is different from the second channel. After establishing the second Wi-Fi connection and the third Wi-Fi connection to the second electronic device, the first electronic device performs a screen projection service with the second electronic device through the second Wi-Fi connection and the third Wi-Fi connection.

According to the second aspect, that the first electronic device establishes a second Wi-Fi connection and a third Wi-Fi connection to a second electronic device includes: After establishing the second Wi-Fi connection to the second electronic device, the first electronic device performs the screen projection service with the second electronic device through the second Wi-Fi connection. If communication quality of the second Wi-Fi connection does not meet a specified transmission condition, the first electronic device establishes the third Wi-Fi connection to the second electronic device.

According to any one of the second aspect or the implementations of the second aspect, the specified transmission condition includes at least one of the following: a transmission delay corresponding to the second Wi-Fi connection is less than a first threshold; and a packet loss rate corresponding to the second Wi-Fi connection is less than a second threshold.

According to any one of the second aspect or the implementations of the second aspect, that the first electronic device performs a screen projection service with the second electronic device through the second Wi-Fi connection and the third Wi-Fi connection includes: The first electronic device generates a first data packet and a second data packet, where the first data packet and the second data packet carry same data. The first electronic device sends the first data packet to the second electronic device through the second Wi-Fi connection, and sends the second data packet to the second electronic device through the third Wi-Fi connection.

According to any one of the second aspect or the implementations of the second aspect, that the first electronic device performs a screen projection service with the second electronic device through the second Wi-Fi connection and the third Wi-Fi connection further includes: The first electronic device generates a third data packet and a fourth data packet, where the third data packet and the fourth data packet carry same data. The first electronic device sends the third data packet to the second electronic device through the second Wi-Fi connection, and sends the fourth data packet to the second electronic device through the third Wi-Fi connection.

According to any one of the second aspect or the implementations of the second aspect, the first data packet and the second data packet each carry a first number, the third data packet and the fourth data packet each carry a second number, and the first number and the second number are adjacent numbers.

According to any one of the second aspect or the implementations of the second aspect, that the first electronic device performs a screen projection service with the second electronic device through the second Wi-Fi connection and the third Wi-Fi connection further includes: If it is detected that the second electronic device does not receive the first data packet and the second data packet, the first electronic device resends the first data packet to the second electronic device through the second Wi-Fi connection, and resends the second data packet to the second electronic device through the third Wi-Fi connection.

According to any one of the second aspect or the implementations of the second aspect, that the first electronic device performs a screen projection service with the second electronic device through the second Wi-Fi connection and the third Wi-Fi connection includes: The first electronic device displays at least a part of an interface of the first electronic device on the second electronic device through the second Wi-Fi connection and the third Wi-Fi connection.

According to any one of the second aspect or the implementations of the second aspect, the first electronic device is a mobile phone, the second electronic device is Vision, and the third electronic device is an access point AP, a router, or a mobile phone.

According to any one of the second aspect or the implementations of the second aspect, that the first electronic device establishes a second Wi-Fi connection and a third Wi-Fi connection to a second electronic device in response to a detected user operation in a process of data exchange with a third electronic device through a first Wi-Fi connection includes: The first electronic device exchanges data with the third electronic device through the first Wi-Fi connection and a fourth Wi-Fi connection, where the fourth Wi-Fi connection is established on a fourth channel in the second frequency band, and the third channel is different from the fourth channel. The first electronic device disconnects the fourth Wi-Fi connection after establishing the second Wi-Fi connection and the third Wi-Fi connection to the second electronic device.

The second aspect and any one of implementations of the second aspect correspond to the first aspect and any one of implementations of the first aspect respectively. For technical effects corresponding to the second aspect and any one of implementations of the second aspect, refer to the technical effects corresponding to the first aspect and any one of implementations of the first aspect. Details are not described herein again.

According to a third aspect, an embodiment of this application provides an electronic device. The electronic device includes a memory and a processor, where the memory stores program instructions, and when the program instructions are executed by the processor, the electronic device is enabled to perform the following steps: establishing a second Wi-Fi connection and a third Wi-Fi connection to a second electronic device in response to a detected user operation in a process of data exchange with a third electronic device through a first Wi-Fi connection, where the first Wi-Fi connection is established on a first channel in a first frequency band, the second Wi-Fi connection is established on a second channel in the first frequency band, the third Wi-Fi connection is established on a third channel in a second frequency band, the first frequency band is different from the second frequency band, and the first channel is different from the second channel; and after establishing the second Wi-Fi connection and the third Wi-Fi connection to the second electronic device, performing a screen projection service with the second electronic device through the second Wi-Fi connection and the third Wi-Fi connection.

According to the third aspect, when the program instructions are executed by the processor, the electronic device is enabled to perform the following steps: after establishing the second Wi-Fi connection to the second electronic device, performing the screen projection service with the second electronic device through the second Wi-Fi connection; and if communication quality of the second Wi-Fi connection does not meet a specified transmission condition, establishing the third Wi-Fi connection to the second electronic device.

According to any one of the third aspect or the implementations of the third aspect, the specified transmission condition includes at least one of the following: a transmission delay corresponding to the second Wi-Fi connection is less than a first threshold; and a packet loss rate corresponding to the second Wi-Fi connection is less than a second threshold.

According to any one of the third aspect or the implementations of the third aspect, when the program instructions are executed by the processor, the electronic device is enabled to perform the following steps: generating a first data packet and a second data packet, where the first data packet and the second data packet carry same data; and sending the first data packet to the second electronic device through the second Wi-Fi connection, and sending the second data packet to the second electronic device through the third Wi-Fi connection.

According to any one of the third aspect or the implementations of the third aspect, when the program instructions are executed by the processor, the electronic device is enabled to perform the following steps: generating a third data packet and a fourth data packet, where the third data packet and the fourth data packet carry same data; and sending the third data packet to the second electronic device through the second Wi-Fi connection, and sending the fourth data packet to the second electronic device through the third Wi-Fi connection.

According to any one of the third aspect or the implementations of the third aspect, the first data packet and the second data packet each carry a first number, the third data packet and the fourth data packet each carry a second number, and the first number and the second number are adjacent numbers.

According to the third aspect or any one of the implementations of the third aspect, when the program instructions are executed by the processor, the electronic device is enabled to perform the following steps: if it is detected that the second electronic device does not receive the first data packet and the second data packet, resending the first data packet to the second electronic device through the second Wi-Fi connection, and resending the second data packet to the second electronic device through the third Wi-Fi connection.

According to the third aspect or any one of the implementations of the third aspect, when the program instructions are executed by the processor, the electronic device is enabled to perform the following step: displaying at least a part of an interface of the first electronic device on the second electronic device through the second Wi-Fi connection and the third Wi-Fi connection.

According to any one of the third aspect or the implementations of the third aspect, the first electronic device is a mobile phone, the second electronic device is Vision, and the third electronic device is an access point AP, a router, or a mobile phone.

According to any one of the third aspect or the implementations of the third aspect, when the program instructions are executed by the processor, the electronic device is enabled to perform the following steps: exchanging data with the third electronic device through the first Wi-Fi connection and a fourth Wi-Fi connection, where the fourth Wi-Fi connection is established on a fourth channel in the second frequency band, and the third channel is different from the fourth channel; and disconnecting the fourth Wi-Fi connection after establishing the second Wi-Fi connection and the third Wi-Fi connection to the second electronic device.

The third aspect and any one of implementations of the third aspect correspond to the first aspect and any one of implementations of the first aspect respectively. For technical effects corresponding to the third aspect and any one of implementations of the third aspect, refer to the technical effects corresponding to the first aspect and any one of implementations of the first aspect. Details are not described herein again.

According to a fourth aspect, an embodiment of this application provides a chip, including one or more interface circuits and one or more processors. The interface circuit is configured to receive a signal from a memory of an electronic device, and send the signal to the processor, where the signal includes computer instructions stored in the memory. When the processor executes the computer instructions, the electronic device is enabled to perform the screen projection method according to any one of the second aspect of the implementations of the second aspect.

The fourth aspect and any one of implementations of the fourth aspect correspond to the first aspect and any one of implementations of the first aspect respectively. For technical effects corresponding to the fourth aspect and any one of implementations of the fourth aspect, refer to the technical effects corresponding to the first aspect and any one of implementations of the first aspect. Details are not described herein again.

According to a fifth aspect, a computer-readable storage medium is provided. The medium includes a computer program. When the computer program is run on an electronic device, the electronic device is enabled to perform the screen projection method according to any one of the second aspect and the implementations of the second aspect.

The fifth aspect and any one of implementations of the fifth aspect correspond to the first aspect and any one of implementations of the first aspect respectively. For technical effects corresponding to the fifth aspect and any one of implementations of the fifth aspect, refer to the technical effects corresponding to the first aspect and any one of implementations of the first aspect. Details are not described herein again.

### BRIEF DESCRIPTION OF DRAWINGS

FIG. 1 is a schematic diagram of an example application scenario;
FIG. 2a to FIG. 2c are schematic diagrams of example screen projection application scenarios;
FIG. 3 is a schematic diagram of an example structure of a mobile phone;
FIG. 4 is a schematic diagram of an example software structure of a mobile phone;
FIG. 5 is a schematic diagram of an example screen projection scenario between a mobile phone and a large screen;
FIG. 6 is a schematic diagram of an example of establishing a Wi-Fi connection between a mobile phone and a large screen;
FIG. 7 is an example schematic flowchart of establishing a Wi-Fi connection between a mobile phone and a large screen;
FIG. 8(1) to FIG. 8(4) are a schematic diagram of an example user interface;
FIG. 9 is a schematic diagram of an example data transmission between a mobile phone and a large screen;
FIG. 10 is a schematic diagram of a principle of a screen projection method according to an embodiment of this application;
FIG. 11 is a schematic diagram of an example application scenario;
FIG. 12a and FIG. 12b are schematic diagrams of establishing a dual-path Wi-Fi connection between a mobile phone and a large screen according to an embodiment of this application;
FIG. 13 is a schematic flowchart of a screen projection method according to an embodiment of this application;
FIG. 14 is a diagram of an example resource distribution;
FIG. 15 is a schematic diagram of an example data transmission;
FIG. 16 is a schematic diagram of an example format of a data packet;
FIG. 17 is a schematic diagram of an example data transmission time sequence on a mobile phone side;
FIG. 18 is a schematic diagram of an example data transmission time sequence on a large screen side;
FIG. 19 is a schematic diagram of an example data processing manner on a large screen side;
FIG. 20 is a schematic diagram of an example data processing manner on a large screen side;
FIG. 21 is a schematic flowchart of a screen projection method according to an embodiment of this application;
FIG. 22 is a schematic flowchart of a screen projection method according to an embodiment of this application;
FIG. 23 is a schematic diagram of an example application scenario;
FIG. 24 is a schematic diagram of an example interaction between an AP, a mobile phone, and a large screen;
FIG. 25 is a schematic diagram of an example channel switch;
FIG. 26 is a schematic diagram of a screen projection method according to an embodiment of this application;
FIG. 27 is a schematic diagram of an example application scenario;
FIG. 28 is a schematic diagram of an example format of a data packet; and
FIG. 29 is a schematic diagram of a structure of an apparatus according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The term "and/or" in this specification describes only an association relationship for describing associated objects and indicates that three relationships may exist. For example, A and/or B may indicate the following three cases: Only A exists, both A and B exist, and only B exists.

In this specification and claims in embodiments of this application, the terms "first", "second", and the like are intended to distinguish between different objects but do not indicate a particular order of the objects. For example, a first target object, a second target object, and the like are used to distinguish between different target objects, but are not used to describe a particular order of the target objects.

In embodiments of this application, the word such as "example" or "for example" is used to represent an example, an illustration, or a description. Any embodiment or design described by "example" or "for example" in embodiments of this application should not be construed as being more preferred or advantageous than another embodiment or design. To be precise, the word such as "example" or "for example" is intended to present a related concept in a specific manner.

In the description of embodiments of this application, unless otherwise specified, "plurality" means two or more. For example, a plurality of processing units refer to two or more processing units, and a plurality of systems refer to two or more systems.

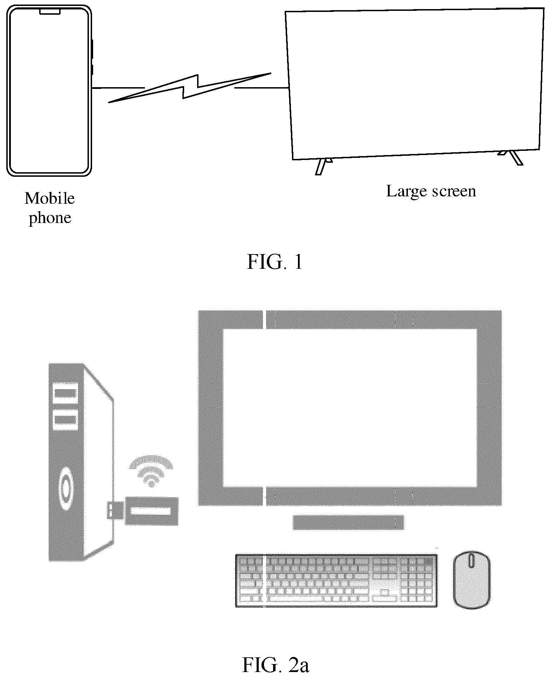

Before the technical solutions in embodiments of this application are described, an application scenario in embodiments of this application is first described with reference to the accompanying drawing. FIG. 1 is a schematic diagram of an application scenario according to an embodiment of this application. The application scenario includes a mobile phone and a large screen (which may also be referred to as Vision). It should be noted that a quantity of electronic devices (mobile phones and large screens) in FIG. 1 is merely an example. This is not limited in this application.

In descriptions of embodiments of this application, a mobile phone and a large screen, that is, a transmit end and a receive end in a screen projection scenario, may also be referred to as P2P (peer-to-peer, peer-to-peer) devices. In embodiments of this application, a screen projection manner between the mobile phone and the large screen is merely used for description. In another embodiment, this application may be further applied to a screen projection scenario between an electronic device such as a mobile phone, a tablet, a notebook, a wearable device, or a large screen (Vision) and an electronic device such as a vehicle-mounted device.

For example, FIG. 2a to FIG. 2c show example screen projection application scenarios. Referring to FIG. 2a, screen projection between a host and a display screen may be performed based on a screen projection solution in embodiments of this application. The host may be used as the transmit end to send data or information to the display screen (namely, the receive end), to display corresponding data or an image on the display screen. For example, a third-party peripheral may be inserted into the host to provide a P2P function, so that the host may establish a P2P connection (or may be referred to as a screen projection connection) to the display screen via the third-party peripheral, and transmit data to the display screen. In this case, data transmission can be implemented between the host and the display screen without using a data cable for connection. This simplifies a connection manner between the host and the display screen.

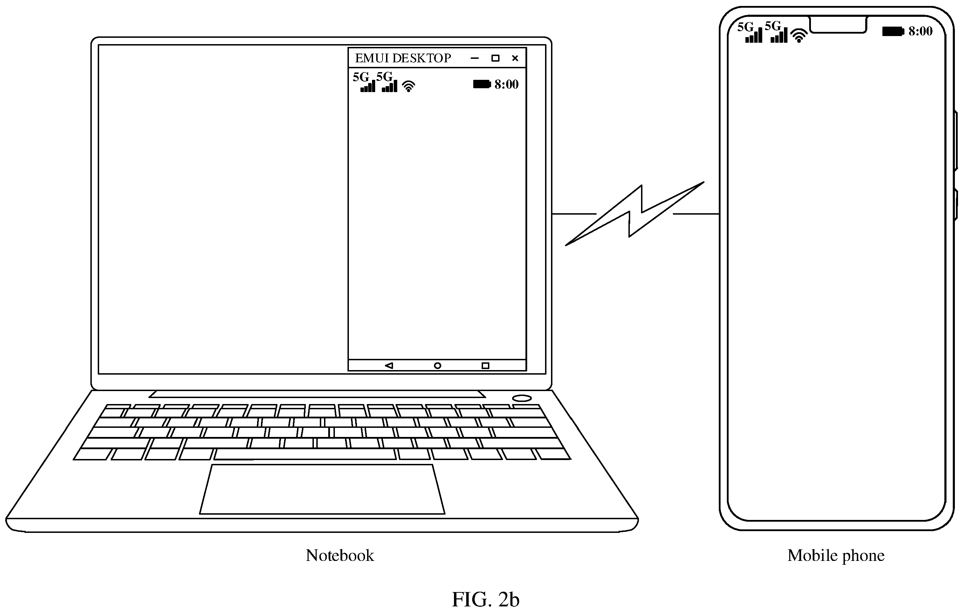

Referring to FIG. 2b, for example, the screen projection solution in embodiments of this application may also be applied to a screen projection application scenario between a mobile phone and a notebook. The mobile phone may be used as the transmit end to send data or information to the notebook. The notebook may display an interface of the mobile phone on a screen, and display an image currently displayed on a home screen of the mobile phone.

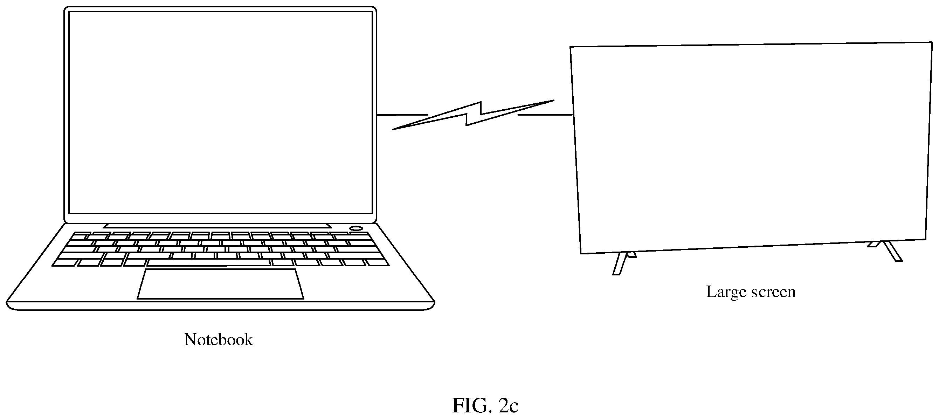

Referring to FIG. 2c, for example, the screen projection solution in embodiments of this application may also be applied to a screen projection application scenario between a large screen and a notebook. The notebook may be used as the transmit end to send data or information to the large screen, to display corresponding data or an image on the large screen.

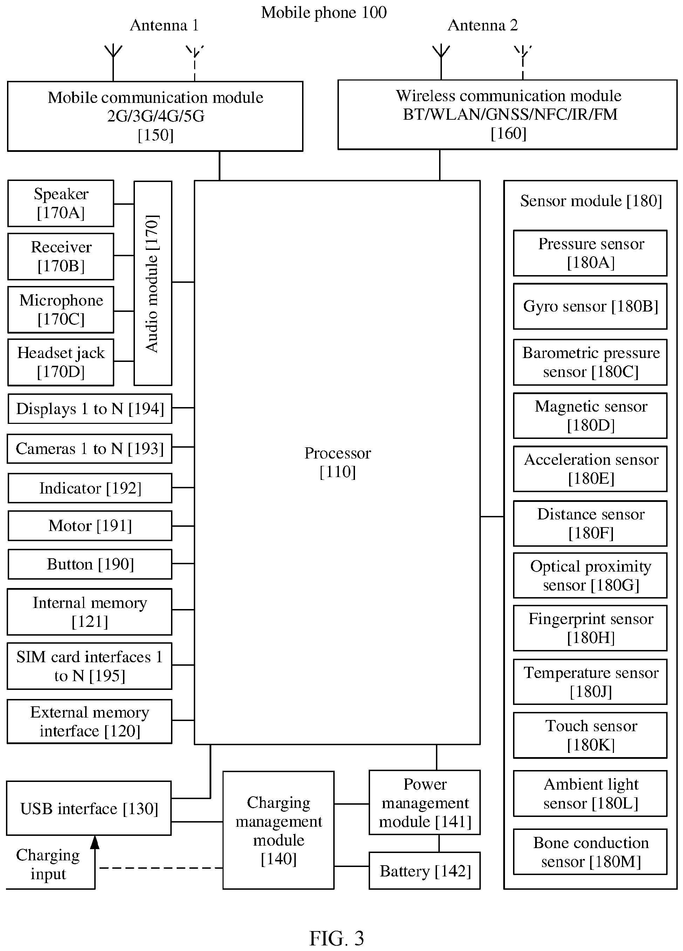

FIG. 3 is a schematic diagram of a structure of a mobile phone according to an embodiment of this application. Although the mobile phone in FIG. 1 is used as an example to describe the structure of the electronic device in FIG. 3, a person skilled in the art understands that the structure of the mobile phone in FIG. 3 is also applicable to the large screen in FIG. 1.

Referring to FIG. 3, the mobile phone 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the mobile phone 100. In other embodiments of this application, the mobile phone 100 may include more or fewer components than those shown in the figure; or have some components combined or split, or have a different arrangement of components. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be separate devices or may be integrated into one or more processors.

The controller may be a nerve center and a command center of the mobile phone 100. The controller may generate an operation control signal based on instruction operation code and a time sequence signal, to complete control of instruction fetching and instruction execution.

The processor 110 may be further provided with a memory for storing instructions and data. In some embodiments, the memory in the processor 110 is a cache memory. The memory may store instructions or data just used or repeatedly used by the processor 110. If the processor 110 needs to use the instructions or data again, the processor 110 may directly invoke the instructions or data from the memory. This avoids repeated access and reduces a waiting time of the processor 110, and therefore improves efficiency of a system.

In some embodiments, the processor 110 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus and includes a serial data line (serial data line, SDA) and a serial clock line (derail clock line, SCL). In some embodiments, the processor 110 may include a plurality of groups of I2C buses. The processor 110 may be coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the mobile phone 100.

The I2S interface may be used for audio communication. In some embodiments, the processor 110 may include a plurality of groups of I2S buses. The processor 110 may be coupled to the audio module 170 through an I2S bus to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used for audio communication, to be specific, sampling, quantization, and coding of an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be used for audio communication.

The UART interface is a universal serial data bus used for asynchronous communication. The bus may be a bidirectional communication bus that switches transmission of to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to peripheral devices such as the display 194 and the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the mobile phone 100. The processor 110 communicates with the display 194 through the DSI interface, to implement a display function of the mobile phone 100.

The GPIO interface may be configured by using software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the mobile phone 100, may be configured to transmit data between the mobile phone 100 and a peripheral device, or may be configured to connect to a headset for playing audio through the headset. The interface may be alternatively configured to connect to another mobile phone, for example, an AR device.

It may be understood that an interface connection relationship between the modules shown in this embodiment of this application is merely an example for description, and does not constitute a limitation on the structure of the mobile phone 100. In some other embodiments of this application, the mobile phone 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input by using a wireless charging coil of the mobile phone 100. When charging the battery 142, the charging management module 140 may further supply power to the mobile phone via the power management module 141.

The power management module 141 is configured to connect to the battery 142, the charging management module 140, and the processor 110. The power management module 141 receives input of the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a cycle count of the battery, and a battery health status (leakage or impedance). In some other embodiments, the power management module 141 may alternatively be disposed in the processor 110. In some other embodiments, the power management module 141 and the charging management module 140 may alternatively be disposed in a same device.

A wireless communication function of the mobile phone 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the mobile phone 100 may be configured to cover one or more communication frequency bands. Different antennas may be reused to improve antenna utilization. For example, the antenna 1 may be reused as a diversity antenna of a wireless local area network. In some other embodiments, the antenna may be used in combination with a tuning switch.

The mobile communication module 150 may provide a solution, applied on the mobile phone 100, for wireless communication such as 2G, 3G, 4G, and 5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit the processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in a same device as the mobile communication module 150 or another functional module.

The wireless communication module 160 may provide a solution, applied to the mobile phone 100, for wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), and an infrared (infrared, IR) technology. The wireless communication module 160 may be one or more devices integrating at least one communication processing module. The wireless communication module 160 receives an electromagnetic wave through the antenna 2, performs frequency modulation and filtering on the electromagnetic wave signal, and sends the processed signal to the processor 110. The wireless communication module 160 may further receive a to-be-sent signal from the processor 110, perform frequency modulation and amplification on the signal. and convert the signal into an electromagnetic wave for radiation through the antenna 2.

In some embodiments, in the mobile phone 100, the antenna 1 and the mobile communication module 150 are coupled, and the antenna 2 and the wireless communication module 160 are coupled, so that the mobile phone 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, the IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The mobile phone 100 implements a display function through the GPU, the display 194, and the application processor. The GPU is a microprocessor for image processing, and is connected to the display 194 and the application processor. The GPU is configured to perform mathematical and geometric computation for graphics rendering. The processor 110 may include one or more GPUs that execute program instructions to generate or change display information.

The display 194 is configured to display an image, a video, and the like. The display 194 includes a display panel. The display panel may use a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini-LED, a micro-LED, a micro-LED, a quantum dot light emitting diode (quantum dot light emitting diodes, QLED), or the like. In some embodiments, the mobile phone 100 may include one or N displays 194, where N is a positive integer greater than 1.

The mobile phone 100 may implement a photographing function by using the ISP, the camera 193, the video codec, the GPU, the display 194, the application processor, and the like.

The ISP is configured to process data fed back by the camera 193. For example, when a shutter is opened for taking a photo, light is transmitted to an image sensor of the camera through a lens so that a light signal is converted into an electrical signal. The image sensor of the camera transmits the electrical signal to the ISP for processing, so that the electrical signal is converted into an image visible to eyes. The ISP may further perform algorithm optimization on noise, brightness, and complexion of the image. The ISP may further optimize parameters such as exposure and color temperature of a shooting scene. In some embodiments, the ISP may be disposed in the camera 193.

The camera 193 is configured to capture a static image or a video. The lens captures an object and an optical image is generated, which is projected onto the image sensor. The photosensitive element may be a charge-coupled device (charge-coupled device, CCD) or a complementary metal-oxide-semiconductor (complementary metal-oxide-semiconductor, CMOS) phototransistor. The image sensor converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format such as RGB or YUV. In some embodiments, the mobile phone 100 may include one or N cameras 193, where N is a positive integer greater than 1.

The digital signal processor is configured to process digital signals, including a digital image signal and other digital signals. For example, when the mobile phone 100 selects a frequency, the digital signal processor is configured to perform Fourier transform on frequency energy.

The video codec is configured to compress or decompress a digital video. The mobile phone 100 may support one or more video codecs. In this way, the mobile phone 100 can play or record videos in a plurality of coding formats such as moving picture experts group (moving picture experts group, MPEG)-1, MPEG-2, MPEG-3, and MPEG-4.

The NPU is a neural-network (neural-network, NN) computing processor that fast processes input information with reference to a structure of a biological neural network structure such as a transfer mode between human brain neurons and can also perform continuous self-learning. The NPU can implement applications such as intelligent cognition of the mobile phone 100, for example, image recognition, facial recognition, speech recognition, and text understanding.

The external memory interface 120 may be configured to connect to an external memory card, for example, a Micro SD card, to extend a storage capability of the mobile phone 100. The external memory card communicates with the processor 110 through the external memory interface 120, to implement a data storage function. For example, files such as music and videos are stored in the external memory card.

The internal memory 121 may be configured to store computer-executable program code. The executable program code includes instructions. The processor 110 executes various functional applications and data processing of the mobile phone 100 by running the instructions stored in the internal memory 121. The internal memory 121 may include a program storage area and a data storage area. The program storage area may store an operating system, an application required by at least one function (such as a sound playing function or an image playing function), and the like. The data storage area may store data (such as audio data or a phone book) created with use of the mobile phone 100. In addition, the internal memory 121 may include a high-speed random access memory, or may include a nonvolatile memory, for example, at least one magnetic disk storage device, a flash memory, or a universal flash storage (universal flash storage, UFS).

With the audio module 170, the speaker 170A, the receiver 170B, the microphone 170C, the headset jack 170D, and the application processor, the mobile phone 100 can implement audio functions, for example, music playing or recording.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The mobile phone 100 can use the speaker 170A to play music or receive a hand-free call.

The receiver 170B, also referred to as an "earpiece", is configured to convert an electrical audio signal into a sound signal. When the mobile phone 100 receives a call or a voice message, the receiver 170B can be placed close to a human ear for the voice to be heard.

The microphone 170C, also referred to as a "mike" or "mic", is configured to convert a sound signal into an electrical signal. When making a call or sending a voice message, a user may input a sound signal into the microphone 170C by speaking close to the microphone 170C. At least one microphone 170C may be disposed in the mobile phone 100. In other embodiments, the mobile phone 100 may be provided with two microphones 170C, which, in addition to collecting a sound signal, can also implement a noise reduction function. In some other embodiments, three, four, or more microphones 170C may alternatively be disposed in the mobile phone 100, to collect a sound signal, implement noise reduction, identify a sound source, implement a directional recording function, and the like.

The headset jack 170D is configured to connect to a wired headset. The headset jack 170D may be a USB interface 130, a 3.5 mm open mobile terminal platform (open mobile terminal platform, OMTP) standard interface, or a cellular telecommunications industry association of the USA (cellular telecommunications industry association of the USA, CTIA) standard interface.

The pressure sensor 180A is configured to sense a pressure signal, and convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The mobile phone 100 determines a pressure strength based on a change of the capacitance. When a touch operation is performed on the display 194, the mobile phone 100 detects a touch operation strength by using the pressure sensor 180A. The mobile phone 100 may also calculate a touch position based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on an SMS message application icon, an instruction to view an SMS message is performed. When a touch operation whose touch operation intensity is greater than or equal to the first pressure threshold is performed on the SMS message application icon, an instruction for creating a new SMS message is performed.

The gyro sensor 180B may be configured to determine a motion posture of the mobile phone 100. In some embodiments, an angular velocity of the mobile phone 100 around three axes (namely, axes x, y, and z) may be determined by using the gyro sensor 180B. The gyro sensor 180B may be used for image stabilization during shooting. For example, when a shutter button is pressed, the gyro sensor 180B detects a shaking angle of the mobile phone 100, and calculates, based on the angle, a distance for which a lens module needs to compensate, so that the lens can move reversely to counteract the shaking of the mobile phone 100, so as to implement image stabilization. The gyro sensor 180B may also be used for navigation and motion-controlled gaming scenarios.

The barometric pressure sensor 180C is configured to measure barometric pressure. In some embodiments, the mobile phone 100 calculates an altitude based on a barometric pressure value measured by the barometric pressure sensor 180C, to assist in positioning and navigation.

The magnetic sensor 180D includes a Hall sensor. The mobile phone 100 may detect opening and closing of a smart cover by using the magnetic sensor 180D. In some embodiments, when the mobile phone 100 is a flip phone, the mobile phone 100 may detect opening and closing of a flip cover by using the magnetic sensor 180D. Further, a feature such as automatic unlocking of the flip cover is set based on a detected opening or closing state of the smart case or a detected opening or closing state of the flip cover.

The acceleration sensor 180E may detect magnitudes of accelerations of the mobile phone 100 in all directions (usually three axes), may detect a magnitude and a direction of gravity when the mobile phone 100 is still, and may be further configured to recognize a posture of the mobile phone, applied to applications such as a landscape/portrait mode switching and a pedometer.

The distance sensor 180F is configured to measure a distance. The mobile phone 100 may measure a distance by using infrared or a laser. In some embodiments, in a shooting scenario, the mobile phone 100 may use the distance sensor 180F to measure a distance for fast focusing.

The optical proximity sensor 180G may include, for example, a light emitting diode (LED) and an optical detector, for example, a photodiode. The light emitting diode may be an infrared light emitting diode. The mobile phone 100 emits infrared light outward by using the light-emitting diode. The mobile phone 100 detects infrared reflected light from a nearby object by using the photodiode. When sufficient reflected light is detected, the mobile phone 100 may determine that there is an object near the mobile phone 100. When insufficient reflected light is detected, the mobile phone 100 may determine that there is no object near the mobile phone 100. The mobile phone 100 may detect, by using the optical proximity sensor 180G, that the user holds the mobile phone 100 close to an ear to make a call, to automatically perform screen-off for power saving. The optical proximity sensor 180G may also be used in a smart cover mode or a pocket mode to automatically perform screen unlocking or locking.

The ambient light sensor 180L is configured to sense brightness of ambient light. The mobile phone 100 may adaptively adjust brightness of the display 194 based on the sensed brightness of the ambient light. The ambient light sensor 180L may also be configured to automatically adjust white balance during photographing. The ambient light sensor 180L may further cooperate with the optical proximity sensor 180G in detecting whether the mobile phone 100 is in a pocket, to prevent an accidental touch.

The fingerprint sensor 180H is configured to collect a fingerprint. The mobile phone 100 may implement fingerprint unlock, application access lock, fingerprint-based photographing, fingerprint-based call answering, and the like by using a feature of the collected fingerprint.

The temperature sensor 180J is used for temperature detection. In some embodiments, the mobile phone 100 executes a temperature processing policy based on a temperature detected by the temperature sensor 180J. For example, when the temperature reported by the temperature sensor 180J exceeds a threshold, the mobile phone 100 lowers performance of a processor near the temperature sensor 180J, to reduce power consumption for thermal protection. In some other embodiments, when the temperature is less than another threshold, the mobile phone 100 heats the battery 142 to prevent the mobile phone 100 from being shut down abnormally because of a low temperature. In some other embodiments, when the temperature is less than still another threshold, the mobile phone 100 boosts an output voltage of the battery 142 to avoid abnormal shutdown caused by a low temperature.

The touch sensor 180K is also referred to as a touch panel. The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor 180K may alternatively be disposed on a surface of the mobile phone 100, and is located on a position different from a position of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The mobile phone 100 may receive a key input, and generate a key signal input related to a user setting and function control of the mobile phone 100.

The motor 191 may generate a vibration prompt. The motor 191 may be configured to provide an incoming call vibration prompt and a touch vibration feedback. For example, touch operations performed on different applications (for example, photographing and audio playback) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. In addition, a touch vibration feedback effect may be user-defined.

The indicator 192 may be an indicator light, and may be configured to indicate a charging status and a power change, or may be configured to indicate a message, a missed call, a notification, and the like.

A software system of the mobile phone 100 may use a layered architecture, an event-driven architecture, a microkernel architecture, a micro service architecture, or a cloud architecture. In this embodiment of this application, an Android system of a layered architecture is used as an example to describe the software structure of the mobile phone 100.

FIG. 2 is a block diagram of a software structure of the mobile phone 100 according to an embodiment of this application.

In the layered architecture, software is divided into several layers, and each layer has a clear role and task. The layers communicate with each other through a software interface. In some embodiments, the Android system is divided into four layers: an application layer, a system framework layer, Android runtime (Android runtime) and a system library, and a kernel layer from top to bottom.

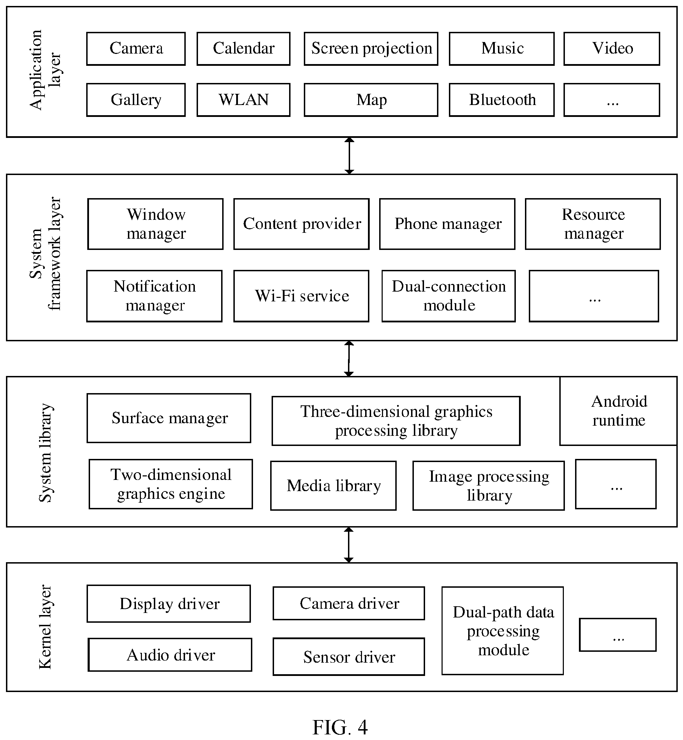

The application layer may include applications such as camera, Gallery, Calendar, screen projection, WLAN, Music, Video, Map, and Bluetooth. It should be noted that the applications included in the application layer shown in FIG. 4 are merely an example for description. This is not limited in this application. It may be understood that an application included in the application layer does not constitute a specific limitation on the mobile phone 100. In some other embodiments of this application, the mobile phone 100 may include more or fewer applications than the applications included in the application layer shown in FIG. 4, or the mobile phone 100 may include completely different applications.

The system framework layer provides an application programming interface (Application Programming Interface, API) and a programming framework for the application at the application layer, including various components and services to support Android development of a developer. The system framework layer includes some predefined functions. As shown in FIG. 4, the system framework layer may include a view system, a window manager, a display interface, a resource manager, a content provider, a dual-connection module, and the like. The view system includes visual controls such as a control for displaying a text and a control for displaying a picture. The view system may be configured to construct an application. A display interface may include one or more views. The window manager is configured to manage a window program. The window manager may obtain a size of a display, determine whether there is a status bar, perform screen locking, take a screenshot, and the like. The resource manager provides various resources such as a localized character string, an icon, a picture, a layout file, and a video file for the application. The content provider is configured to store and obtain data, and make the data accessible to the application. The data may include a video, an image, audio, and the like. The dual-connection module is configured to manage a Wi-Fi connection between the mobile phone and another electronic device (for example, a large screen), for example, configured to establish a Wi-Fi connection, disconnect a Wi-Fi connection, and maintain a Wi-Fi connection.

The system library and runtime layer includes a system library and Android runtime (Android Runtime). The system library may include a plurality of functional modules, such as a browser kernel, a 3D graphics library (for example, OpenGL ES), and a font library. The browser kernel is responsible for interpreting syntax of a web page (for example, an application HTML or JavaScript in the standard generalized markup language) and rendering (displaying) the web page. The 3D graphics library is used to implement three-dimensional graphics drawing, image rendering, synthesis, layer processing, and the like. The font library is used to implement inputting of different fonts. The Android runtime includes core libraries and a virtual machine. The Android runtime is responsible for scheduling and management of the Android system. The kernel library includes two parts: functions to be called in Java language and core libraries of Android. The application layer and the application framework layer run on the virtual machine. The virtual machine executes Java files at the application layer and the application framework layer as binary files. The virtual machine is configured to implement functions such as object lifecycle management, stack management, thread management, security and exception management, and garbage collection.

It may be understood that components included in the system framework layer, the system library, and the runtime layer shown in FIG. 4 do not constitute any limitation on the mobile phone 100. In other embodiments of this application, the mobile phone 100 may include more or fewer components than those shown in the figure; or have some components combined or split, or have a different arrangement of components.

The kernel layer is a layer between hardware and software. The kernel layer includes at least a display driver, a camera driver, an audio driver, a sensor driver, and a dual-path data processing module. The dual-path data processing module is configured to perform corresponding processing on data on dual Wi-Fi connections.

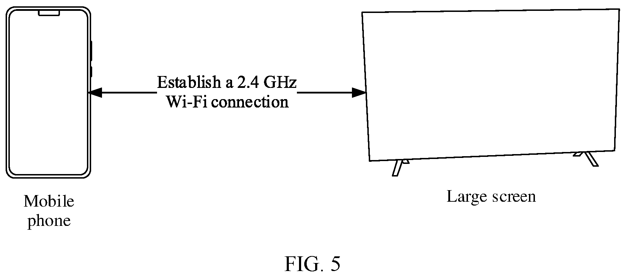

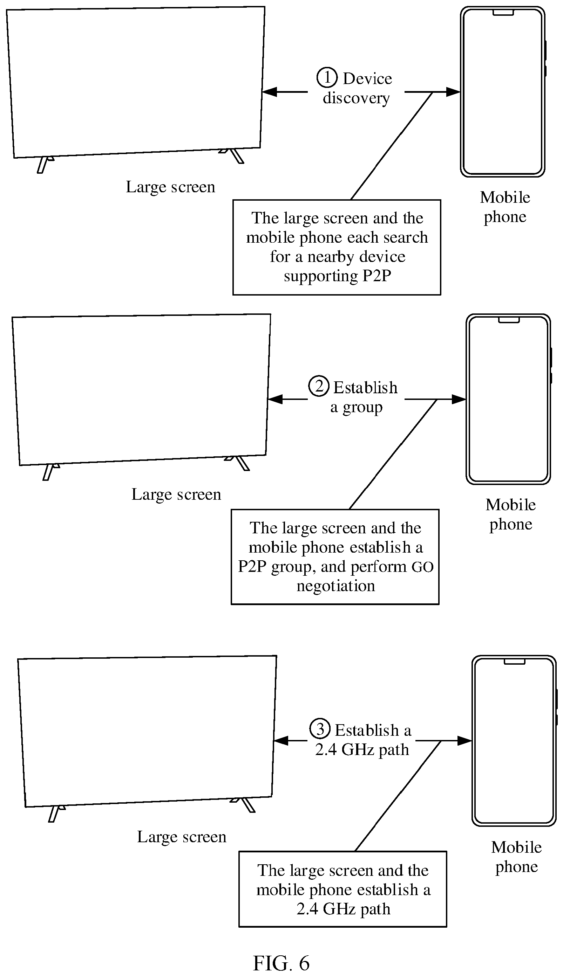

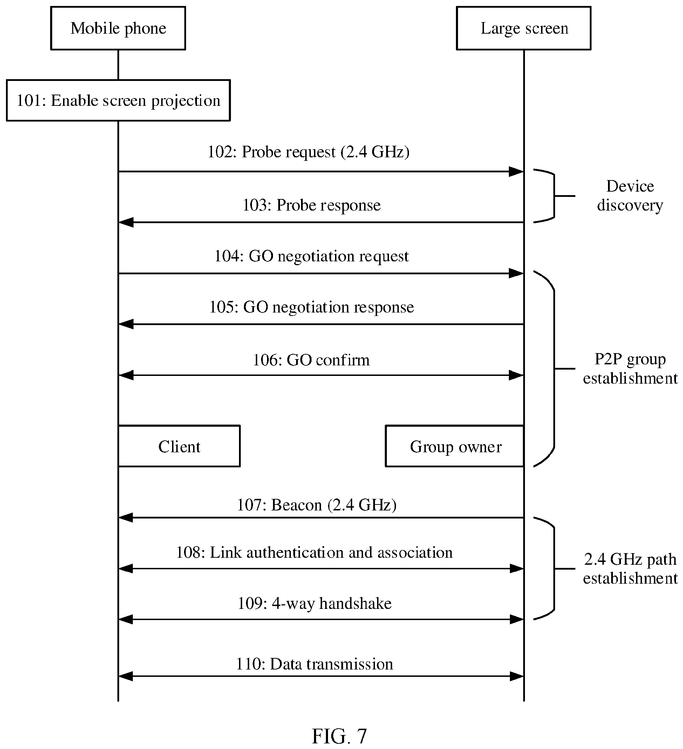

For example, FIG. 5 shows an example screen projection scenario between a mobile phone and a large screen. Referring to FIG. 5, a 2.4 GHz Wi-Fi connection (which may also be referred to as a 2.4 GHz path, a 2.4 GHz screen projection path, a 2.4 GHz P2P connection, or the like) may be established between the mobile phone and the large screen. For example, the mobile phone may exchange data with the large screen through the 2.4 GHz Wi-Fi connection established between the mobile phone and the large screen. With reference to FIG. 6 and FIG. 7, the following describes in detail a process of establishing the 2.4 GHz Wi-Fi connection between the mobile phone and the large screen.

Referring to FIG. 6, for example, the process of establishing the 2.4 GHz Wi-Fi connection between the mobile phone and the large screen may be divided into three parts:

Part 1: Device discovery. Specifically, in a device discovery phase, the mobile phone and the large screen each may discover by searching a nearby device that supports P2P. For example, the mobile phone may discover by searching a nearby large screen that supports P2P. Similarly, the large screen may discover by searching a nearby mobile phone that supports P2P.

Part 2: The mobile phone and the large screen establish a group. Specifically, the mobile phone is used as an example herein. After discovering a nearby large screen that supports P2P, the mobile phone may establish a P2P Group with the large screen, and negotiate who will play the role of GO (Group Owner, group owner) and who will play the role of Client (member, also referred to as a group member).

For example, a function of GO is similar to a function of an access point AP (Access Point), which may also be referred to as a base station, in a basic service set BSS (Basic Service Set). A function of Client is similar to a function of a station (Station, STA) in the BSS. The station refers to a terminal device (electronic device) that has a Wi-Fi communication function and is connected to a wireless network, for example, a mobile phone, a tablet computer, or a notebook computer. The station may support a plurality of wireless local area network (wireless local area network, WLAN) standards of the 802.11 family such as 802.11be, 802.11ax, 802.11ac, 802.11n, 802.11g, 802.11b, and 802.11a.

The access point may be a terminal device (for example, a mobile phone) with a Wi-Fi chip or a network device (for example, a router). For example, the access point may be a device that supports the 802.11be standard. Alternatively, the access point may be a device that supports a plurality of WLAN standards of the 802.11 family such as 802.11be, 802.11ax, 802.11ac, 802.11n, 802.11g, 802.11b, and 802.11a.

It should be noted that the electronic device in embodiments of this application is usually a terminal that supports standards of the 802.11 family. In an evolution process from 802.11a to 802.11g, 802.11n, 802.11ac, and 802.11ax, available frequency bands include 2.4 GHz (GHz) and 5 GHz. With increasingly more available frequency bands, a maximum channel bandwidth supported by 802.11 is expanded from 20 megahertz (MHz) to 40 MHz and then to 160 MHz. In 2017, the federal communications commission (federal communications commission, FCC) opened up a new unlicensed frequency band of 6 GHz (5925 MHz to 7125 MHz). Drafters of the 802.11ax standard expanded an operating range of 802.11ax devices from 2.4 GHz and 5 GHz to 2.4 GHz, 5 GHz, and 6 GHz in the 802.11ax project authorization request (project authorization request, PAR). In this application, an example in which each electronic device works at 2.5 GHz and 5 GHz is merely used for description. Embodiments of this application are also applicable to a screen projection scenario between devices that support a next-generation communication protocol (for example, 802.11be).

Part 3: The mobile phone and the large screen establish a 2.4 GHz path. Specifically, after the mobile phone and the large screen have determined the roles of GO and Client, the GO (for example, the large screen) may initiate a 2.4 GHz path establishment process to the Client (for example, the mobile phone). After successfully establishing the 2.4 GHz path, the large screen and the mobile phone may exchange data on the path. It should be noted that the GO may be a transmit end (for example, the mobile phone) in a screen projection scenario, or may be a receive end (for example, the large screen) in a screen projection scenario. This is not limited in this application.

With reference to FIG. 7, the following describes the three parts of content shown in FIG. 6. Referring to FIG. 7, specific steps are included as follows:

S101: The mobile phone enables screen projection.

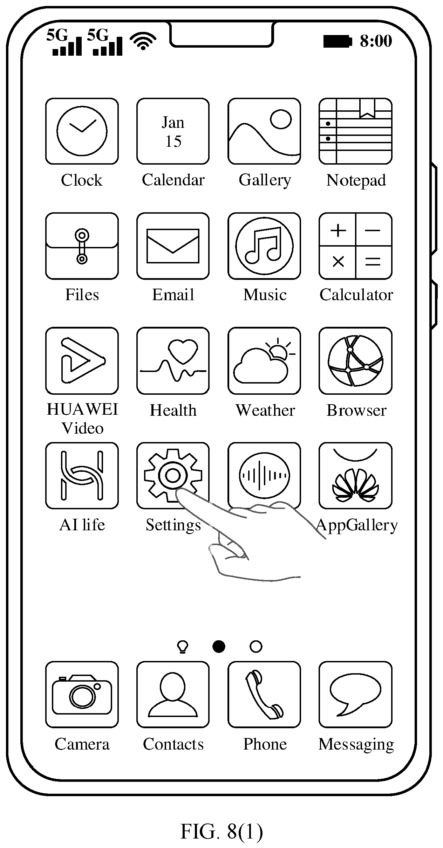

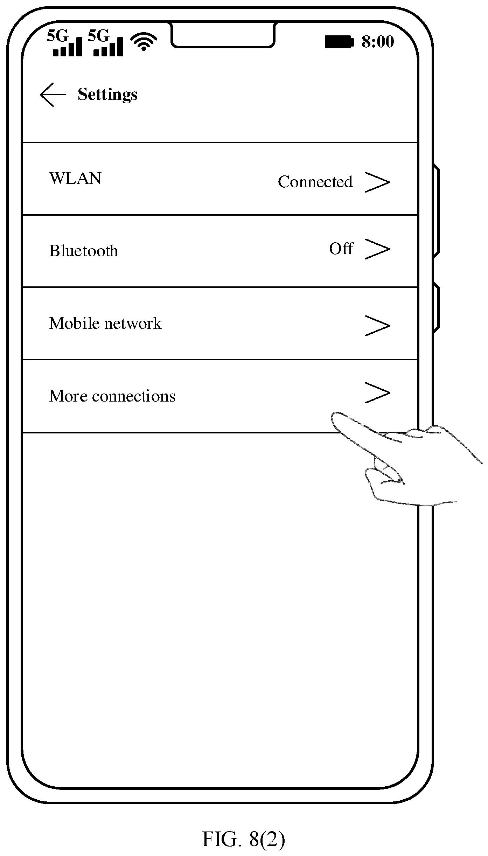

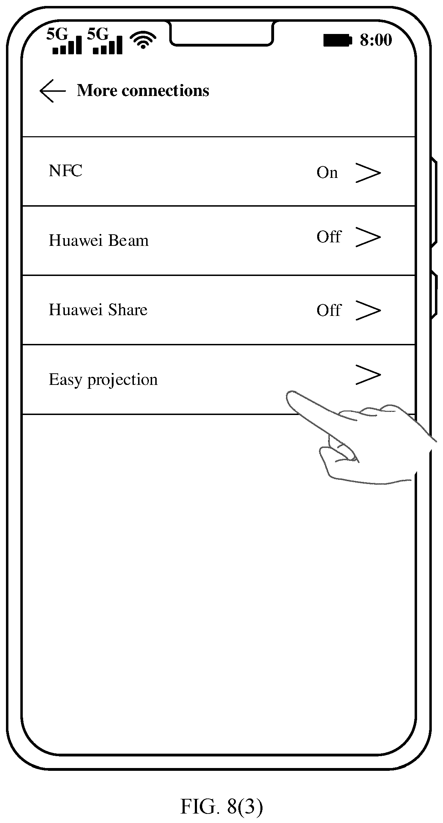

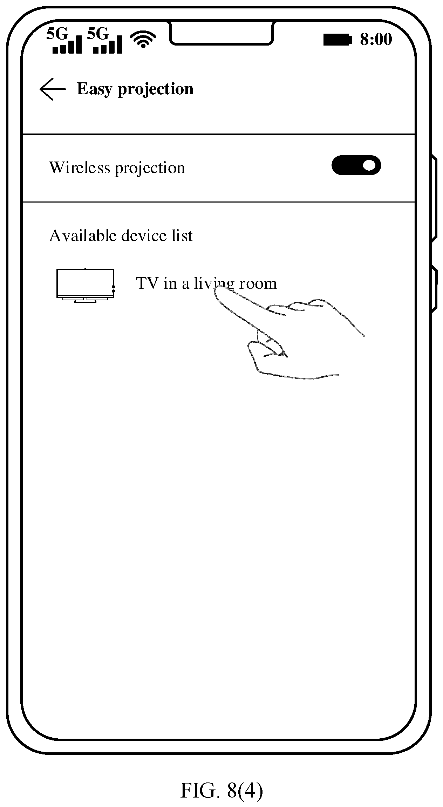

For example, FIG. 8(1) to FIG. 8(4) are a schematic diagram of an example user interface. Referring to FIG. 8(1), a display window of the mobile phone may include one or more parts, including but is not limited to a display interface, application icons, a battery level icon, a network icon, and the like. A user may tap a setting icon in the display window of the mobile phone to enter a setting interface. The mobile phone displays the setting interface in response to a tapping operation of the user. Referring to FIG. 8(2), the setting interface includes one or more options, including but is not limited to WLAN, Bluetooth, Mobile network, and More connections. For example, the user may further tap the setting option of More connections, and the mobile phone displays a setting interface of More connections in response to the tap operation of the user. Referring to FIG. 8(3), for example, the setting interface of More connections includes one or more options, including but is not limited to NFC, HUAWEI Beam, Huawei Share, and Easy projection. For example, the user may tap the setting option of Easy projection, and the mobile phone displays a setting interface of Easy projection in response to the tap operation of the user. Referring to FIG. 8(4), for example, the setting interface of Easy projection includes one or more parts, including but is not limited to a wireless projection setting option and an available device list. For example, when the wireless projection setting option is not enabled, the user may manually enable the wireless projection setting option by tapping. After the wireless projection setting option is enabled, the mobile phone may automatically search for a nearby available P2P device, and display a found P2P device in the available device list, for example, a TV in a living room shown in FIG. 8(4). The user may tap the P2P device displayed in the available device list, to indicate the mobile phone to perform screen projection to the TV in a living room (namely, the large screen).

S102: The mobile phone sends a probe request (probe request) message to the large screen.

Still referring to FIG. 7, for example, the mobile phone sends the probe request message to the large screen, to request to communicate with the large screen. For example, the mobile phone may send the probe request message on each of channels 1, 6, and 11 in a 2.4 GHz frequency band.

S103: The large screen sends a probe response (probe response) message to the mobile phone.

For example, the large screen receives the probe request message on any one of channels 1, 6, and 11, may select one of the channels on which the probe request message is received, and send the probe response message to the mobile phone on the channel (for example, the channel 6).

S104: The mobile phone sends a GO negotiation request (GO negotiation request) message to the large screen.

For example, the mobile phone sends the GO negotiation request message to the large screen on the channel 6 in response to the probe response message received from the large screen.

S105: The large screen sends a GO negotiation response (GO negotiation response) message to the mobile phone.

For example, the large screen sends the GO negotiation response message to the mobile phone on the channel 6 in response to the GO negotiation request message received from the mobile phone.

S106: The mobile phone sends a GO confirm (GO confirm) message to the large screen.

It should be noted that three frame exchanges in S104 to S106 are used to exchange information, so as to determine GO and Client. The information exchanged in the three frame exchanges includes but is not limited to a MAC address of the GO, a group ID, and other information. In descriptions of this embodiment of this application, an example in which the large screen is a GO and the mobile phone is a client is used for description.

S107: The large screen sends a Beacon (beacon) message to the mobile phone.

For example, after the large screen and the mobile phone have established a group, the large screen, as the GO end, may send the beacon message (a broadcast message) (which may also be referred to as a beacon frame), to establish a screen projection path with another device in the 2.4 GHz frequency band.

For example, an example in which the large screen sends the beacon message on the channel 3 of 2.4 GHz is used for description.

S108: The mobile phone performs link authentication and association with the large screen.

For example, after detecting, through listening on the channel 3, the beacon message sent by the large screen, the mobile phone initiates a link authentication and association procedure with the large screen. A plurality of frame exchanges are needed in the link authentication and association procedure, to exchange information such as MAC address information, an encryption manner, and a supported channel set.

S109: The mobile phone performs 4-way handshake (4-way handshake) with the large screen.

For example, the mobile phone and the large screen successfully establish a 2.4 GHz path on the channel 3 after the 4-way handshake. It should be noted that S102 to S109 in FIG. 7 are merely examples. A process of establishing the 2.4 GHz path between the mobile phone and the large screen may include more frame interaction processes than those in FIG. 7. For information and formats carried in frames and functions thereof, refer to descriptions in an existing standard. Details are not described in this application again.

S110: The mobile phone performs data transmission with the large screen.

For example, the mobile phone may send data to the large screen through the established 2.4 GHz path, to display a corresponding image in a display window on the large screen.

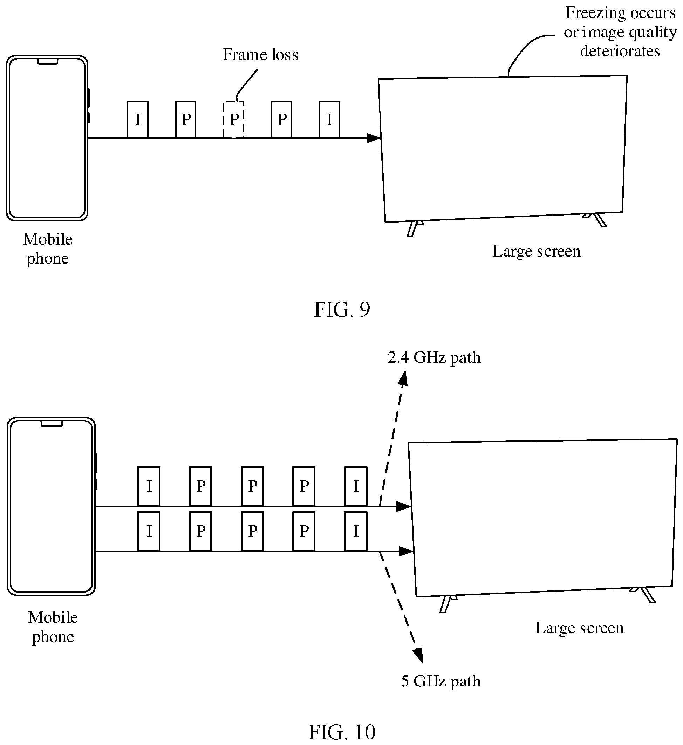

FIG. 9 is a schematic diagram of data transmission between a mobile phone and a large screen. Referring to FIG. 9, for example, in a process in which the mobile phone sends an image frame to the large screen through the 2.4 GHz path, it is assumed that image frames sent by the mobile phone to the large screen include I frame, P frame, P frame, P frame, and I frame, and each frame is encapsulated as a data packet. When the mobile phone transmits data packets corresponding to the image frames to the large screen, a frame loss may occur due to network issues such as channel interference. For example, as shown in FIG. 9, in a process in which the mobile phone sends a plurality of data packets to the large screen, one packet, in the data packets, that carries P frame is lost. Correspondingly, the image frames received by the large screen are: I frame, P frame, P frame, and I frame. For example, if the lost P frame is a key frame and the large screen does not receive this P frame, decoding of P frame following the lost P frame will fail, causing a problem such as freezing or image quality deterioration (for example, erratic display) on the large screen. It should be noted that a key frame indicates that an inter-frame prediction parameter between the key frame and a previous frame (which may be I frame, or may be B frame or P frame) and/or a next frame (which may be I frame, or may be B frame or P frame) is greater than or equal to a threshold (which may be set according to an actual requirement). It may be understood that decoding of the next frame depends on the key frame. If the large screen does not receive the key frame but receives only the next frame, the large screen cannot decode the next frame and display a corresponding image.

To overcome a disadvantage in a conventional technology, an embodiment of this application provides a screen projection method. FIG. 10 is a schematic diagram of a principle of a screen projection method according to an embodiment of this application. Referring to FIG. 10, in this embodiment of this application, a mobile phone establishes dual links to a large screen, that is, two screen projection paths. The two screen projection paths are inter-frequency paths, to be specific, a first path is in a 2.4 GHz frequency band, and a second path is in a 5 GHz frequency band. In a screen projection process, the mobile phone may send data to the large screen through the 2.4 GHz path and the 5 GHz path. This improves a fault tolerance rate of a screen projection system. Specifically, even if data on one path is lost, the large screen can still obtain the corresponding data on the other path. This resolves problems of freezing or poor image quality in a screen projection scenario.

The technical solution in FIG. 10 is described in detail below by using several specific embodiments.

### Scenario 1

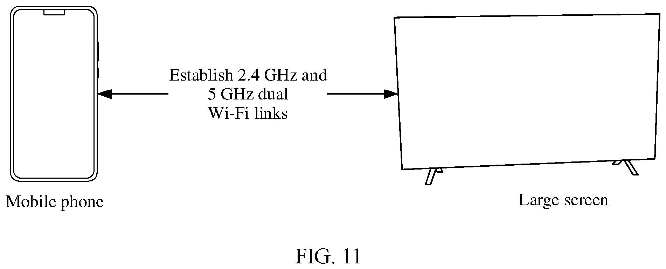

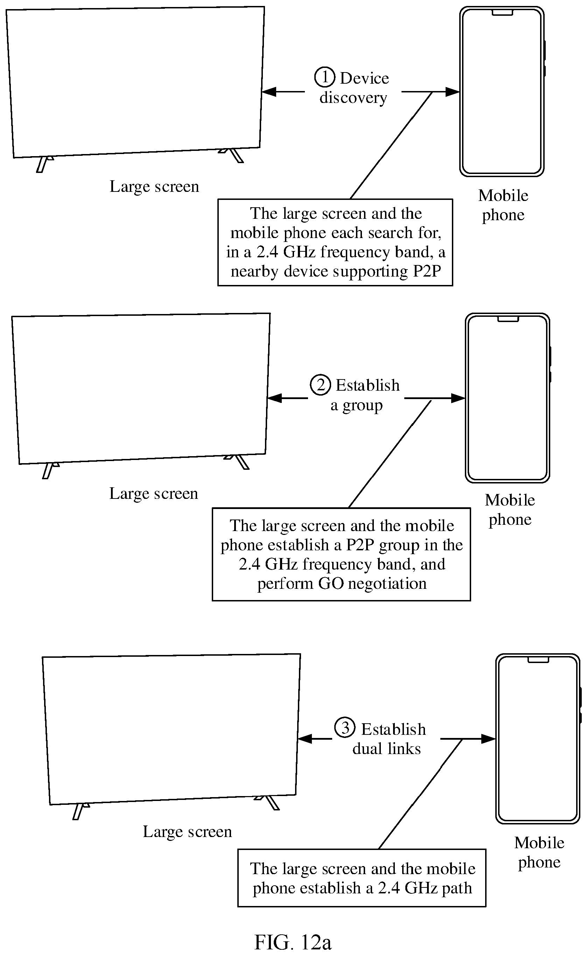

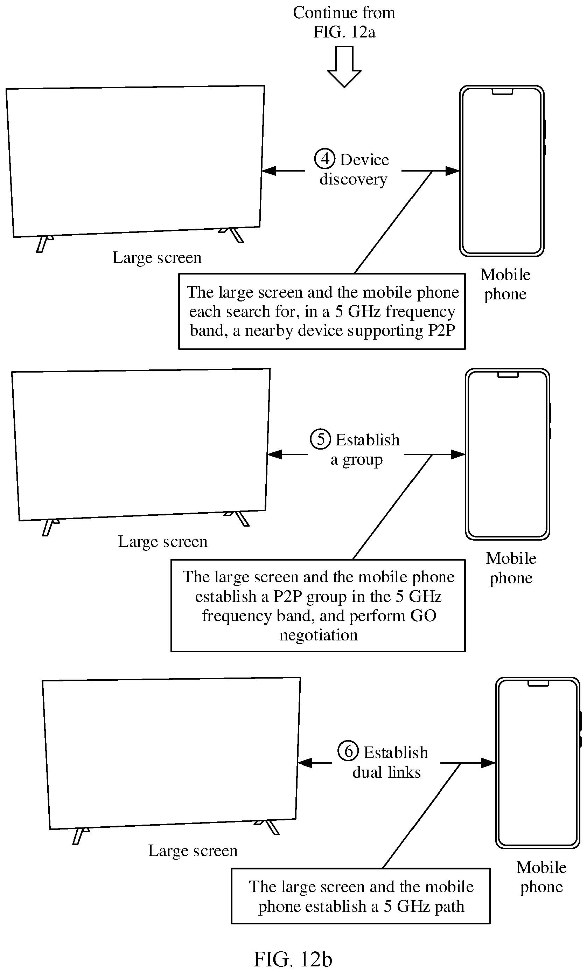

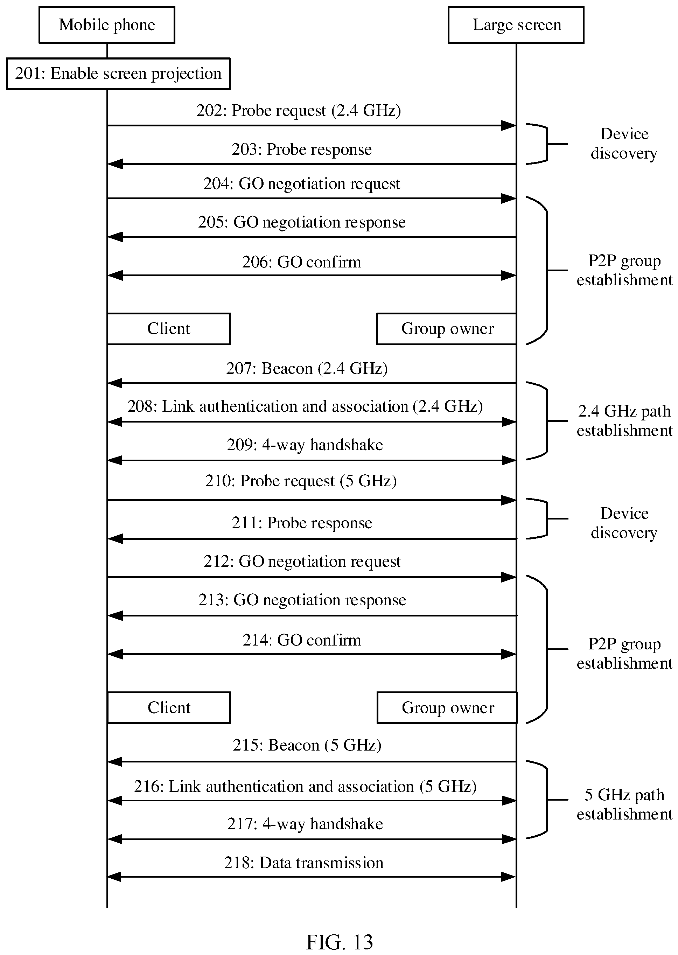

FIG. 11 shows an application scenario according to an embodiment of this application. Referring to FIG. 11, for example, a 2.4 GHz Wi-Fi connection and a 5 GHz Wi-Fi connection (dual Wi-Fi links for short) may be established between the mobile phone and the large screen. For example, the mobile phone may exchange data with the large screen through the dual Wi-Fi links established between the mobile phone and the large screen. With reference to FIG. 12a, FIG. 12b, and FIG. 13, the following describes in detail a process of establishing the 2.4 GHz Wi-Fi connection between the mobile phone and the large screen.

Referring to FIG. 12a, for example, the process of establishing the 2.4 GHz Wi-Fi connection between the mobile phone and the large screen may be divided into three parts:
Part 1: Device discovery.
Part 2: The mobile phone and the large screen establish a group.
Part 3: The mobile phone and the large screen establish a 2.4 GHz path.

Specific content of part 1 to part 3 is the same as the related content in FIG. 6. Details are not described herein again.

Specifically, referring to FIG. 12b, after establishing the 2.4 GHz path with the large screen, the mobile phone may repeatedly perform a procedure of device discovery, group establishment, and path establishment in the 5 GHz frequency band, to establish a P2P path in the 5 GHz frequency band. Referring to FIG. 12b, the following steps are included.

Part 4: Device discovery.

Part 5: The mobile phone and the large screen establish a group.

Part 6: The mobile phone and the large screen establish a 5 GHz path.

A difference of FIG. 12b from FIG. 12a lies in that all parts (part 4, part 5, and part 6) in FIG. 12b are implemented in the 5 GHz frequency band.

It should be noted that, an example in which the 2.4 GHz path is first established between the large screen and the mobile phone, and then the 5 GHz path is established is used for description in this embodiment of this application. In another embodiment, the 5 GHz path may alternatively be first established between the large screen and the mobile phone, and then the 2.4 GHz path is established. This is not limited in this application.

With reference to FIG. 13, the following describes content shown in FIG. 12a and FIG. 12b. Referring to FIG. 13, the following steps are specifically included.

S201: The mobile phone enables screen projection.

S202: The mobile phone sends a probe request message to the large screen.

S203: The large screen sends a probe response message to the mobile phone.

S204: The mobile phone sends a GO negotiation request message to the large screen.

S205: The large screen sends a GO negotiation response message to the mobile phone.

S206: The mobile phone sends a GO confirm message to the large screen.

S207: The large screen sends a beacon message to the mobile phone.

S208: The mobile phone performs link authentication and association with the large screen.

S209: The mobile phone performs 4-way handshake with the large screen.

Specific content of S201 to S209 is respectively the same as the content of S101 to S109. Details are not described herein again.

S210: The mobile phone sends a probe request message to the large screen.

S211: The large screen sends a probe response message to the mobile phone.

S212: The mobile phone sends a GO negotiation request message to the large screen.

S213: The large screen sends a GO negotiation response message to the mobile phone.

S214: The mobile phone sends a GO confirm message to the large screen.

S215: The large screen sends a beacon message to the mobile phone.

S216: The mobile phone performs link authentication and association with the large screen.

S217: The mobile phone performs 4-way handshake with the large screen.

Specific content of S210 to S217 is respectively the same as the related content of S101 to S109, with a difference in that messages in S210 to S217 such as the probe request message, the GO negotiation request message, and the beacon message are all sent on a channel in the 5 GHz frequency band. For other content, refer to the related content of S101 to S109. Details are not described herein again.

It should be noted that a GO on the 2.4 GHz path may be the same as or may be different from a GO on the 5 GHz path. In this embodiment of this application, GO on the 2.4 GHz path being the same as GO on the 5 GHz path (both are large screens) is used as an example for description.

For example, in this embodiment, the two screen projection paths established between the mobile phone and the large screen are channel 3 of 2.4 GHz and channel 149 of 5 GHz.

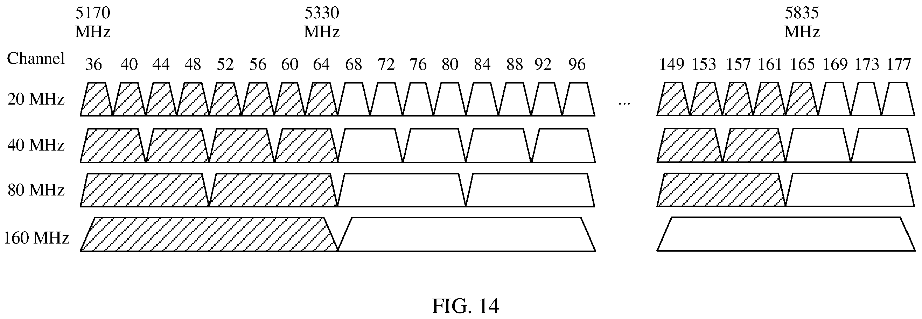

FIG. 14 is a diagram of an example distribution of 5 GHz resources. The 5 GHz frequency band is 5170 MHz to 5835 MHz, including available channels from channel 36 to channel 165. A shaded part in FIG. 14 illustrates 5 GHz channels currently available for China, including channel 36 to channel 64 and channel 149 to channel 165. For example, when the GO (namely, the large screen) establishes a 5 GHz path with a client (the mobile phone), after the large screen establishes a group with the mobile phone, the large screen may select any one of the available 5 GHz channels and send a beacon frame to the mobile phone on the channel (for example, channel 149), so as to establish the 5 GHz path with the mobile phone on the channel. After detecting, through listening, the beacon frame on channel 149, the mobile phone performs a process of establishing the 5 GHz path with the large screen, that is, performs 5 GHz link authentication and association with the large screen and subsequent steps. For channel selection during establishment of the 2.4 GHz path, refer to the channel selection process for the 5 GHz path. It should be noted that available channels of the 2.4 GHz are channel 1 to channel 14. For other content, refer to the channel selection process for the 5 GHz path. Details are not described herein again. Optionally, before S210, the mobile phone may detect whether a hardware capability of the mobile phone supports establishment of two screen projection paths, and perform S210 when detecting that the hardware capability of the mobile phone supports establishment of two screen projection paths.

S218: The mobile phone performs data transmission with the large screen.

For example, after establishing the two paths with the large screen, the mobile phone may send data (for example, a data packet carrying an image frame) to the large screen, and the large screen may display a corresponding image based on the received data.

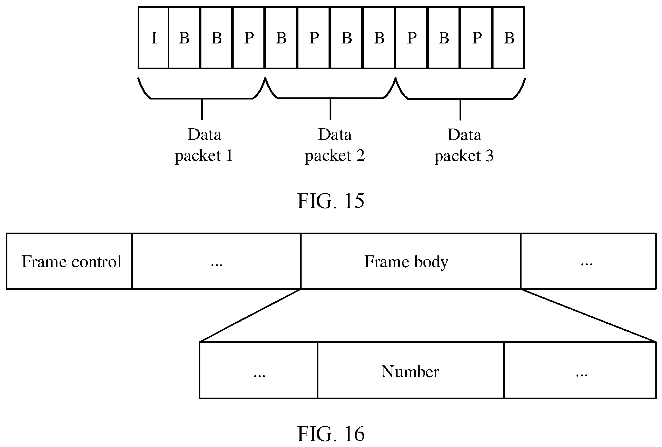

For example, an example in which the mobile phone sends image frames to the large screen is used for description. Referring to FIG. 15, the image frames sent by the mobile phone to the large screen include: I frame, B frame, B frame, P frame, B frame, P frame, B frame, B frame, P frame, B frame, P frame, and B frame in sequence. A quantity and a sequence of image frames in FIG. 15 are merely examples. This is not limited in this application.

For example, referring to FIG. 15, a plurality of image frames may be encapsulated into one data packet during encapsulation for the mobile phone. It should be noted that, in another embodiment, the mobile phone may encapsulate one image frame into one data packet, or may encapsulate one image frame into a plurality of data packets. The encapsulation manner in FIG. 15 is merely an example, and is not limited in this application.

For example, referring to FIG. 16, a frame body (Frame Body) field in an encapsulated data packet includes a number field, where the number field includes number information used to indicate a sequence of data packets. For example, the sequence of data packets may be a sending sequence of the data packets, or may be a generation sequence (that is, an encapsulation sequence) of the data packets. The generation sequence may be the same as or may be different from the sending sequence. It should be noted that a location of the field in FIG. 16 is merely an example and is not limited in this application. The plurality of data packets in FIG. 15 are used as an example for description. For example, a number field in a frame body field of data packet 1 includes number 1, a number field in a frame body field of data packet 2 includes number 2, and a number field in a frame body field of data packet 3 includes number 3. After the mobile phone sends data packets 1 to 3 to the large screen, the large screen receives the data packets 1 to 3 and parses the data packets 1 to 3, to obtain the numbers in the data packets 1 to 3. In this way, the large screen determines that a sending sequence of the data packets 1 to 3 is: data packet 1, data packet 2, and data packet 3.

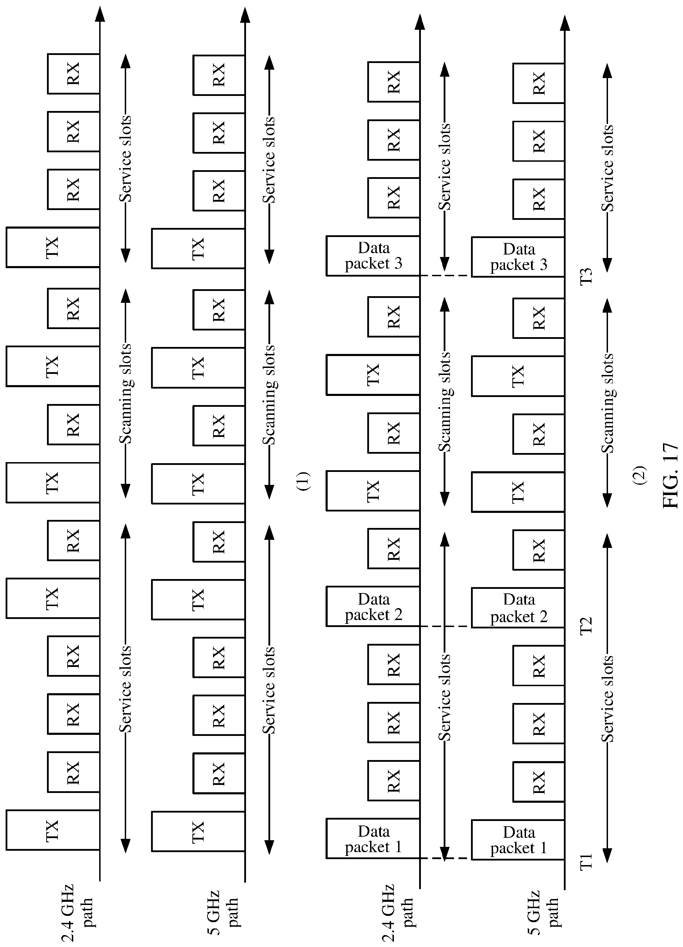

FIG. 17 is a schematic diagram of an example data transmission time sequence. Referring to (1) in FIG. 17, using slots on the 2.4 GHz path as an example, the slots on the 2.4 GHz path include service slots and scanning slots. A sending slot (TX) in the service slots is used to transmit data, and a receiving slot (RX) in the service slots is used to receive ACK (Acknowledge character, acknowledge character) information sent by a peer end (for example, the large screen). The ACK information is used to indicate that the large screen has successfully received data sent by the mobile phone. It should be noted that for a data packet, for example, the data packet 2 carrying number 2, if the mobile phone does not receive ACK information corresponding to the data packet 2 on the 2.4 GHz path and the 5 GHz path after sending the data packet 2 on the 2.4 GHz path and the 5 GHz path, the mobile phone determines that the data packet 2 fails to be sent. Then, the mobile phone may send the data packet 2 again on the 2.4 GHz path and the 5 GHz path in a next sending slot (a sending slot in the service slots). Correspondingly, in a case that a data packet fails to be sent, the mobile phone can retransmit the data packet by sending the data on each of the two paths.

Still referring to (1) in FIG. 17, for a mobile phone side (namely, a client end), a sending slot (TX) in the scanning slots is used to send the foregoing probe request message, or a receiving slot (RX) in the scanning slots is used to receive the beacon frame sent by the large screen. In other words, the mobile phone establishes a second screen projection path with the large screen in the scanning slots by listening to the beacon frame or actively sending a probe request frame. It should be noted that, the mobile phone may further determine, by periodically listening to a beacon frame or actively sending a probe request frame, whether to maintain a connection to the large screen. If no beacon frame sent by the large screen is received in five scanning slots (a quantity may also be another value, which is not limited in this application), or no response message sent by the large screen is received after the probe request frame is sent, the mobile phone may determine to disconnect from the large screen.

Optionally, for a large screen side (namely, a GO end), a scanning slot on the large screen side is used to listen to the probe request frame sent by the mobile phone or actively send a beacon frame. The large screen serves as the GO, and the beacon frame sent by the large screen is not only used to keep the mobile phone connected to the large screen and/or to establish the second screen projection path with the mobile phone, but also used to invite another electronic device to join a group to which the mobile phone and the large screen belong. Slots on the 5 GHz path are the same as the slots on the 2.4 GHz path. Details are not described herein again.

(2) in FIG. 17 shows a data transmission time sequence by using the data packets in FIG. 15 as an example. As described above, in a data transmission process, the mobile phone sends a same data packet on the 2.4 GHz path and the 5 GHz path. For example, after generating the data packet 1, the mobile phone copies the data packet 1 to obtain two data packets 1, and sends, at a moment T1, one of the data packets 1 in a sending slot of the 2.4 GHz path and the other data packet 1 on the 5 GHz path. Correspondingly, at a moment T2, the mobile phone sends the data packet 2 in the sending slots of the 2.4 GHz path and the 5 GHz path, and at a moment T3, the mobile phone sends the data packet 3 in the sending slots of the 2.4 GHz path and the 5 GHz path. It should be noted that the sending moment in (2) in FIG. 17 is merely an example. For example, due to impact of a processing delay, a delay may exist between a sending moment of the data packet 1 on 2.4 GHz and a sending moment of the data packet 1 on 5 GHz.

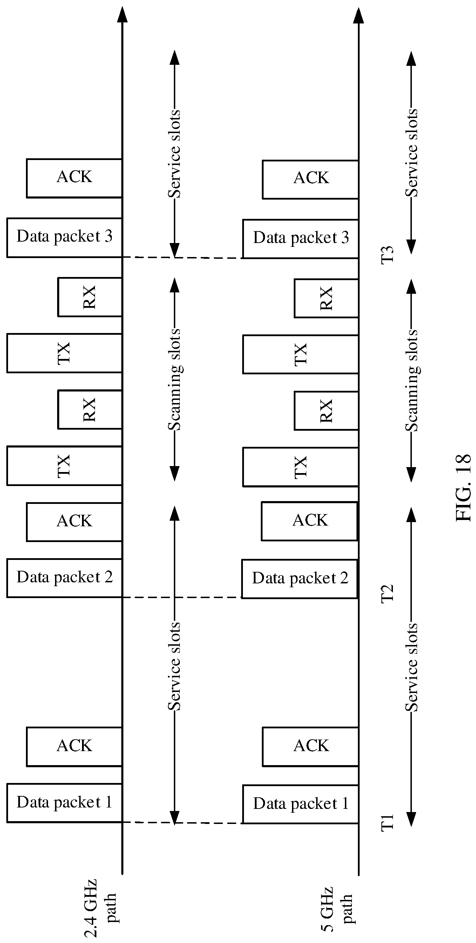

FIG. 18 is a schematic diagram of data transmission slots on a large screen side. Referring to FIG. 18, for example, the mobile phone receives the data packet 1 on the 2.4 GHz path and the 5 GHz path at the moment T1, receives the data packet 2 on the 2.4 GHz path and the 5 GHz path at the moment T2, and receives the data packet 3 on the 2.4 GHz path and the 5 GHz path at the moment T3. In addition, after receiving each data packet, the large screen feeds back ACK information to the mobile phone. For example, after receiving the data packet 1, the large screen sends ACK information in a sending slot, and the mobile phone may receive, in an RX slot, the ACK information fed back by the large screen. It should be noted that the receiving moment shown in FIG. 18 is merely an example. Actually, due to impact of a transmission delay or the like, data packets with a same number transmitted on the 2.4 GHz path and the 5 GHz path may arrive at the large screen at different moments. For example, the data packet may be transmitted faster on the 2.4 GHz path, or may be transmitted faster on the 5 GHz path. This is not limited in this application.

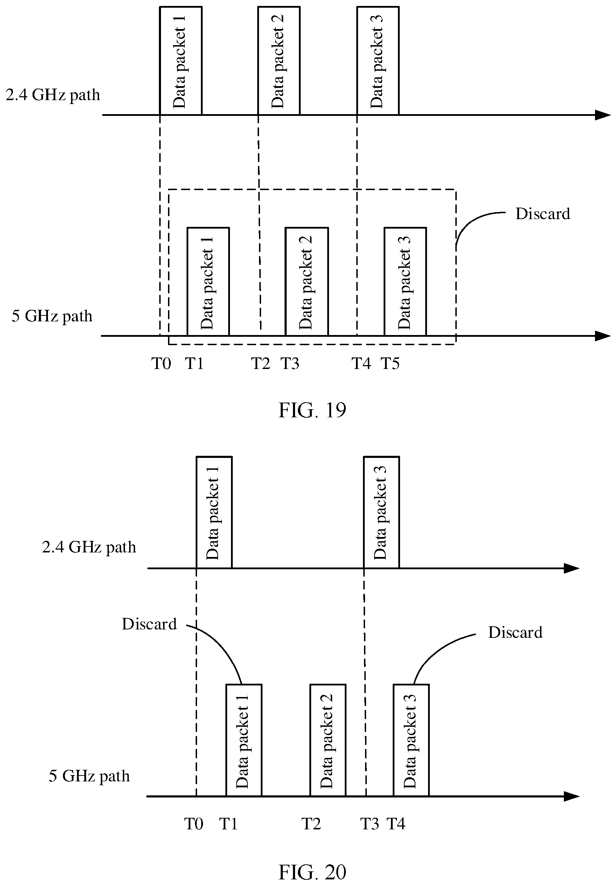

FIG. 19 shows an example data processing manner on the large screen side. Referring to FIG. 19, as described above, data packets with a same number transmit on the 2.4 GHz path and the 5 GHz path may arrive at the large screen at different moments. It is assumed that the large screen receives, at a moment T0, the data packet 1 transmitted on the 2.4 GHz path; receives, at a moment T 1, the data packet 1 transmitted on the 5 GHz path; receives, at a moment T2, the data packet 2 transmitted on the 2.4 GHz path; receives, at a moment T3, the data packet 2 transmitted on the 5 GHz path; receives, at a moment T4, the data packet 3 transmitted on the 2.4 GHz path; and receives, at a moment T5, the data packet 3 transmitted on the 5 GHz path. Using the data packet 1 as an example, after receiving, at the moment T1, the data packet 1 transmitted on the 2.4 GHz path, the large screen may parse the data packet 1, to obtain a number (number 1) carried in the data packet 1. The large screen outputs an image frame in the data packet to an upper-layer application for processing such as decoding and display, and the large screen records the code 1 to indicate that the data packet with the number 1 has been received.

The large screen receives, at the moment T1, the data packet 1 transmitted on the 5 GHz path. The large screen parses the data packet 1 and obtains the number 1 carried in the data packet. The large screen may detect whether a data packet with the same code is received. For example, the large screen determines, by detecting recorded numbers, that the data packet with the number 1 has been received. In this case, the large screen discards the data packet (namely, the data packet 1 received on the 5 GHz path). For processing of another data packet, refer to processing of the data packet 1. For example, the large screen discards the data packet 2 and the data packet 3 received on the 5 GHz path. It should be noted that, the receiving moments of the data packets in FIG. 19 are merely examples. If a data packet, that has a same number as another packet, transmitted on the 5 GHz path arrives at the large screen side first, the large screen discards the another data packet with the same number received on the 2.4 GHz path.

Optionally, in this embodiment of this application, the large screen uses the 2.4 GHz path as a primary path. Correspondingly, after receiving a data packet transmitted on the primary path, the large screen may not need to perform repeated detection, that is, does not need to detect whether a packet with a same number is received. In other words, if the data packet 1 on the 5 GHz path arrives first before the data packet 1 on the 2.4 GHz path, the large screen does not process the data packet 1 on the 5 GHz path after receiving the data packet 1, and discards the data packet 1 received on the 5 GHz path after receiving the data packet 1 on the 2.4 GHz path.

FIG. 20 shows an example data processing manner on the large screen side. Referring to FIG. 20, for example, the large screen receives, at the moment T0, the data packet 1 transmitted on the 2.4 GHz path; receives, at the moment T1, the data packet 1 transmitted on the 5 GHz path; receives, at a moment T2, the data packet 2 transmitted on the 5 GHz path; receives, at a moment T3, the data packet 3 transmitted on the 2.4 GHz path; and receives, at a moment T4, the data packet 3 transmitted on the 5 GHz path. For example, for processing of the data packet 1 by the large screen, refer to the descriptions in FIG. 19. Details are not described herein again. At the moment T2, the large screen receives the data packet 2 transmitted on the 5 GHz path, parses the data packet 2, and obtains the number 2 carried in the data packet. Then, the large screen detects whether a data packet carrying the number 2 is received. For example, the large screen determines, by searching a historical record, that a data packet with the number 2 is not received. In this case, the large screen outputs an image frame in the data packet to an upper layer for decoding and display. Therefore, when data on the 2.4 GHz path is lost in a transmission process, corresponding data can still be obtained on the 5 GHz path. Subsequently, the large screen performs corresponding processing on the data packet 3 received at the moment T3 on the 2.4 GHz path and the data packet 3 received at the moment T4 on the 5 GHz path. For a processing process, refer to the processing of the data packet 1. Details are not described herein again.

In a possible implementation, still referring to FIG. 20, the large screen uses the 2.4 GHz path as the primary path. At the moment T0, the large screen receives the data packet 1 transmitted on the 2.4 GHz path, parses the data packet, obtains the number 1 carried in the data packet 1, and performs corresponding processing on a carried image frame. At the moment T1, the large screen receives the data packet 1 transmitted on the 5 GHz path and stores the data packet 1 without processing. In addition, the large screen stores the data packet 2 that is transmitted on the 5 GHz path and that is received at the moment T2. At the moment T3, the large screen receives the data packet 3 transmitted on the 2.4 GHz path, and obtains, after parsing, the number 3 carried in the data packet 3. The large screen may determine, based on the received number 1 and number 3, that a data packet to which the number 2 belongs is missing. The large screen may obtain the stored data packet 2, carrying the number 2, transmitted on the 5 GHz path, perform corresponding processing on an image frame carried in the data packet 2, and then perform corresponding processing on an image frame carried in the data packet 3 (on the 2.4 GHz path). Optionally, aging duration (for example, 100s) may be set for the 5 GHz path on the large screen side. At an end moment of each aging duration, a data packet on the 5 GHz path stored within the aging duration is cleared.

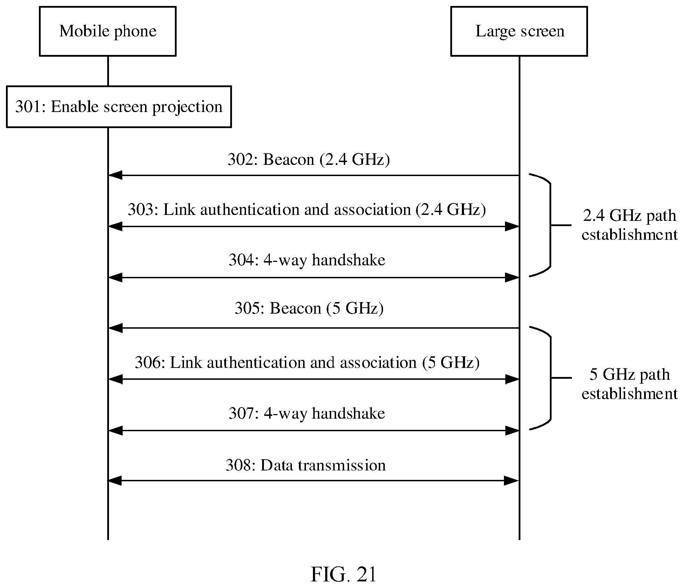

In a possible implementation, the two screen projection paths between the large screen and the mobile phone may alternatively be in a non-P2P mode, that is, using a STA-AP mode. FIG. 21 further describes steps of the screen projection method between the mobile phone and the large screen. Referring to FIG. 21, the following steps are included.

S301: The mobile phone enables screen projection.

S302: The large screen sends a beacon message to the mobile phone.

S303: The mobile phone performs link authentication and association with the large screen.

S304: The mobile phone performs 4-way handshake with the large screen.

S305: The large screen sends a beacon message to the mobile phone.

S306: The mobile phone performs link authentication and association with the large screen.

S307: The mobile phone performs 4-way handshake with the large screen.

S308: The mobile phone performs data transmission with the large screen.

A difference of FIG. 21 from FIG. 13 lies in that when a screen projection path (including the 2.4 GHz path and the 5 GHz path) is established between the mobile phone and the large screen in FIG. 21, part 1 and part 2 do not need to be performed. For specific content of S301 to S307, refer to the related descriptions of S207 to S209 and the related descriptions of S215 to S218. Details are not described herein again.

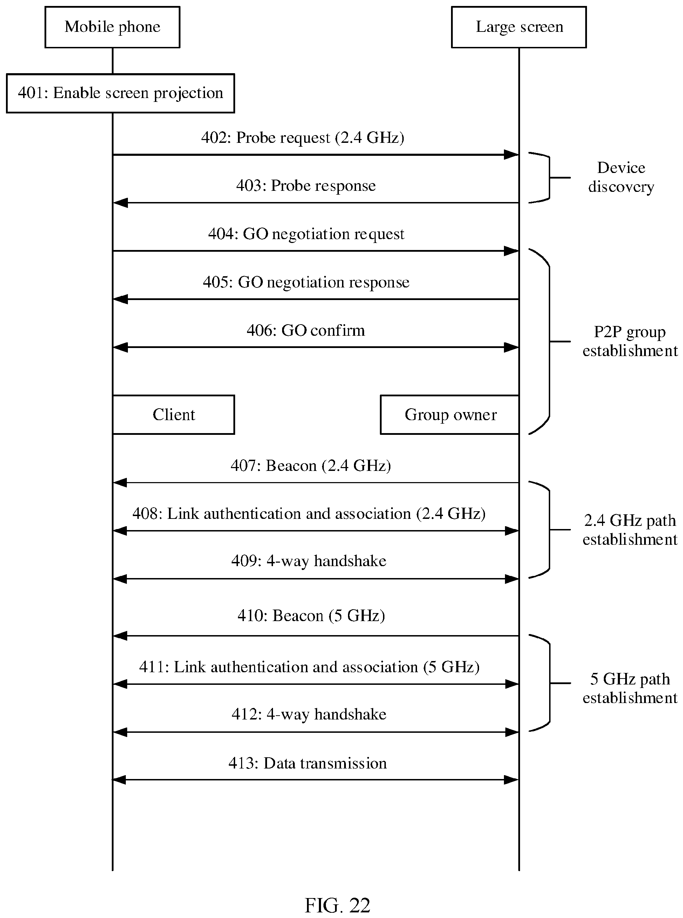

In another possible implementation, one of the two screen projection paths between the large screen and the mobile phone may be in a P2P mode, and the other screen projection path may use a STA-AP mode. FIG. 22 further describes steps of the screen projection method between the mobile phone and the large screen. Referring to FIG. 22, the following steps are specifically included.

S401: The mobile phone enables screen projection.

S402: The mobile phone sends a probe request message to the large screen.

S403: The large screen sends a probe response message to the mobile phone.

S404: The mobile phone sends a GO negotiation request message to the large screen.

S405: The large screen sends a GO negotiation response message to the mobile phone.

S406: The mobile phone sends a GO confirm message to the large screen.

S407: The large screen sends a beacon message to the mobile phone.

S408: The mobile phone performs link authentication and association with the large screen.

S409: The mobile phone performs 4-way handshake with the large screen.

S410: The large screen sends a beacon message to the mobile phone.

S411: The mobile phone performs link authentication and association with the large screen.

S412: The mobile phone performs 4-way handshake with the large screen.

S413: The mobile phone performs data transmission with the large screen.

A difference of FIG. 22 from FIG. 13 lies in that when the 5 GHz path is established between the mobile phone and the large screen in FIG. 22, part 1 and part 2 do not need to be performed. It should be noted that, in another embodiment, it may alternatively be the case that the 2.4 GHz path uses a STA-AP mode, and the 5 GHz path uses a P2P mode. This is not limited in this application. For specific content of S401 to S413, refer to the related descriptions of S201 to S209 and the related descriptions of S215 to S218. Details are not described herein again.

In still another possible implementation, the large screen and the mobile phone may directly initiate, in response to a user operation, a procedure of establishing two P2P paths, and perform screen projection based on the two established P2P paths. In another example, in a process in which the large screen exchanges data with the mobile phone through the 2.4 GHz path, the large screen or the mobile phone may determine, based on a specified detection condition, whether to establish the 5 GHz path. For example, the specified detection condition may be that if a frame loss rate is greater than a threshold (for example, 30%), the large screen establishes the 5 GHz path with the mobile phone, to reduce the frame loss rate and improve image quality displayed on the large screen. In an example, the large screen may determine the frame loss rate based on numbers of received data packets. For example, if the large screen receives 10 data packets, in which data packets with numbers 2, 4, 5, and 6 are lost, the large screen determines that the frame loss rate is greater than the threshold, and performs a process of establishing the 5 GHz path with the mobile phone. In another example, the mobile phone may determine the frame loss rate based on a quantity of pieces of received ACK information. As described above, in a process of interaction between the mobile phone and the large screen, each time the mobile phone sends one data packet, the mobile phone generally receives ACK information fed back by the large screen that indicates that the large screen has successfully received the data packet. If the mobile phone sends 10 data packets and receives ACK information corresponding to only six of the data packets, the mobile phone determines that the frame loss rate is greater than the threshold, and performs a process of establishing the 5 GHz path with the large screen.

In yet another possible implementation, the mobile phone or the large screen may further invite another electronic device to join the screen projection system. For example, as described above, the mobile phone or the large screen may broadcast a beacon frame in a scanning stage. After enabling a screen projection application, the another electronic device may participate in a process of establishing a 2.4 GHz path and a 5 GHz path with the mobile phone or the large screen based on the received beacon frame. For an establishment process, refer to the figure.

In still yet another possible implementation, the mobile phone and the large screen may transmit all data packets except a key frame through one of the paths (for example, the 2.4 GHz path), and transmit the key frame through the other path (5 GHz path) (for a concept of the key frame, refer to the foregoing description).

It should be noted that in this embodiment of this application, an example in which the 2.4 GHz path is first established and then the 5 GHz path is established is used for description. In another embodiment, the 5 GHz path may be first established between the large screen and the mobile phone, and then the 2.4 GHz path is established. This is not limited in this application.

It should be further noted that the screen projection solution in this embodiment of this application may be applied to the next-generation 802.11 standard. If the next-generation 802.11 standard supports another frequency band, for example, a 6 GHz frequency band, two or more screen projection paths may be further established between the large screen and the mobile phone in two or more frequency bands of the 2.4 GHz frequency band, the 5 GHz frequency band, and another supported frequency band (for example, the 6 GHz frequency band).

It should be further noted that the mobile phone and the large screen in this embodiment of this application have a same account.

### Scenario 2

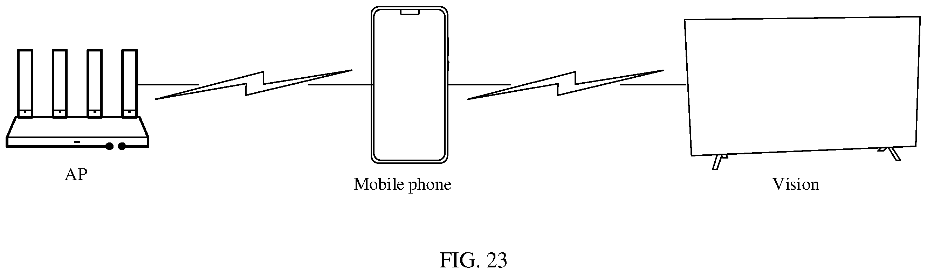

FIG. 23 is a schematic diagram of another application scenario according to an embodiment of this application. Referring to FIG. 23, the application scenario includes an AP, a mobile phone, and a large screen. Optionally, the AP may alternatively be a device such as a mobile phone or a router. This is not limited in this application.

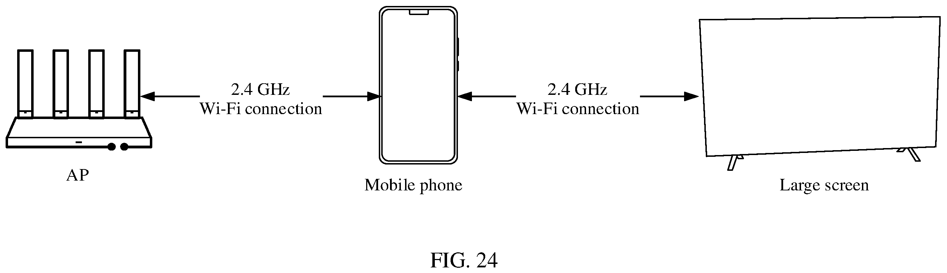

With reference to FIG. 23, FIG. 24 is a schematic diagram of an example interaction scenario between the AP, the mobile phone, and the large screen. Referring to FIG. 24, for example, the mobile phone may establish a 2.4 GHz Wi-Fi connection to the AP, to access a core network via the AP. The AP provides an Internet access function for the mobile phone. For example, the mobile phone may download an image or read a web page. Still referring to FIG. 24, for example, in a process in which the mobile phone and the AP exchange data through a 2.4 GHz path, a 2.4 GHz path (a screen projection path) may be established between the mobile phone and the large screen, and data exchange is performed through the 2.4 GHz path between the mobile phone and the large screen, to implement screen projection.

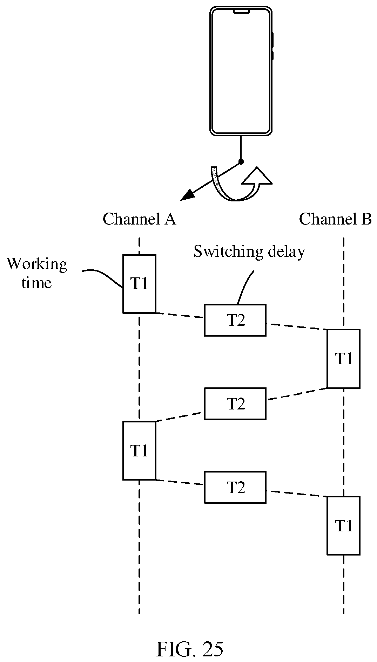

FIG. 23 is a schematic diagram of an example channel switch of a mobile phone. Referring to FIG. 25, that the 2.4 GHz path between the mobile phone and the AP is a channel A in the 2.4 GHz frequency band, and the 2.4 GHz path between the mobile phone and the large screen is a channel B in the 2.4 GHz frequency band is used as an example. For example, in a scenario of intra-frequency inter-channel (that is, the two channels are two different channels in the 2.4 GHz frequency band), a time division multiplexing manner is used for slot allocation. As shown in FIG. 23, when the mobile phone and the AP perform data interaction, data of the mobile phone and the AP may be transmitted on the channel A for corresponding transmission duration (also referred to as a working time of the mobile phone on the channel A) of T1 (for example, 25 ms, 50 ms, or 75 ms). For example, the mobile phone may send data to the AP in a T1 slot of the channel A, and then the mobile phone switches to the channel B to perform data interaction with the large screen. In a switching process, a required switching delay T2 is about 2 ms. After the mobile phone switches to the channel B, a working time of the mobile phone on the channel B is T1, that is, the mobile phone may perform data interaction with the large screen within the duration of T1. For example, the mobile phone may send an image frame to the large screen in the T1 slot on the channel B. During interaction with the AP and the large screen, the mobile phone switches between the channel A and the channel B successively. Correspondingly, due to impact of the working time on the channel A and the switching delay, when the mobile phone exchanges data with the large screen on the channel B, a data transmission delay may be long.

To resolve the foregoing problem, in this embodiment of this application, two screen projection paths are established between the mobile phone and the large screen, including the 2.4 GHz path and the 5 GHz path. The 2.4 GHz path between the mobile phone and the large screen and the 2.4 GHz path between the mobile phone and the AP refer to two intra-frequency channels, to reduce the data transmission delay between the mobile phone and the large screen.

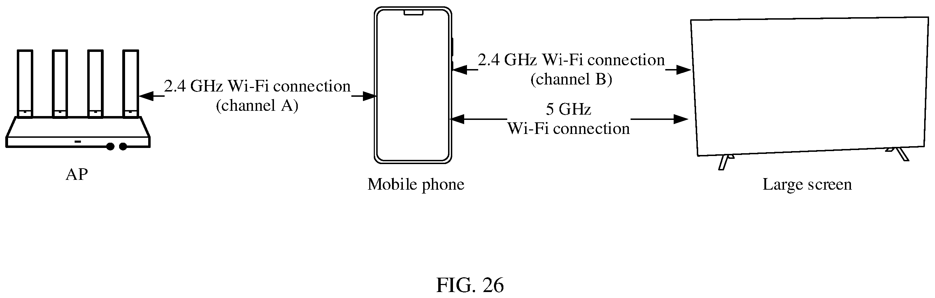

FIG. 26 is a schematic diagram of a screen projection method according to an embodiment of this application. Referring to FIG. 26, for example, a mobile phone exchanges data with an AP through a 2.4 GHz path. For a manner of establishing a 2.4 GHz path between the mobile phone and the AP, refer to the 2.4 GHz path establishment procedure in FIG. 21. Details are not described herein again. After enabling a screen projection application, the mobile phone may establish a 2.4 GHz path and a 5 GHz path with the large screen. For a specific establishment process, refer to any process in FIG. 13, FIG. 21, and FIG. 22. Details are not described herein again. It should be noted that, the 2.4 GHz path between the mobile phone and the large screen and the 2.4 GHz path between the AP and the mobile phone refer to two intra-frequency channels. For example, the 2.4 GHz path between the mobile phone and the large screen is a channel B in the 2.4 GHz frequency band, and the 2.4 GHz path between the mobile phone and the AP is a channel A in the 2.4 GHz frequency band.

In a possible implementation, a path between the AP and the mobile phone may alternatively be a 5 GHz path, and a 5 GHz path between the mobile phone and the large screen and the 5 GHz path between the AP and the mobile phone refer to two intra-frequency channels.

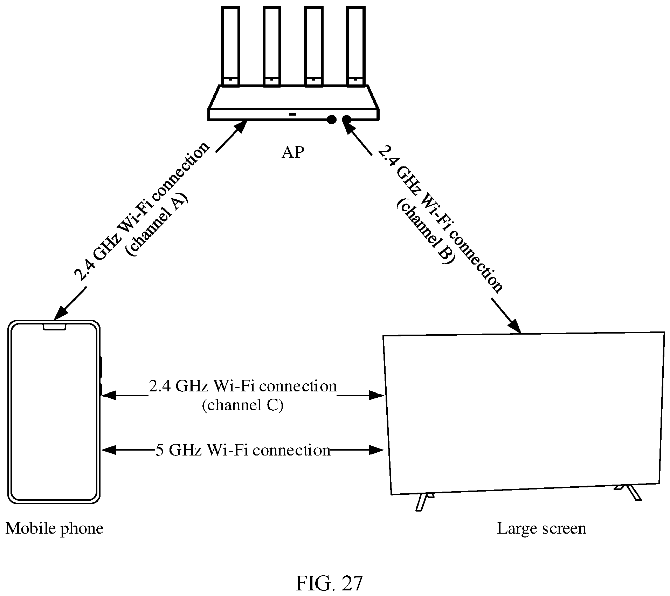

FIG. 27 is a schematic diagram of another application scenario according to an embodiment of this application. Referring to FIG. 27, for example, the mobile phone and the AP, and the large screen and the AP may communicate with each other through the 2.4 GHz path. Optionally, the path between the mobile phone and the AP and the path between the large screen and the AP may alternatively be inter-frequency paths. For example, the path between the mobile phone and the AP is a 2.4 GHz path, and the path between the large screen and the AP is a 5 GHz path. This is not limited in this application.

For example, still referring to FIG. 27, it is assumed that the 2.4 GHz path between the mobile phone and the AP is the channel A in the 2.4 GHz frequency band, and the 2.4 GHz path between the large screen and the AP is the channel B in the 2.4 GHz frequency band. In a screen projection process, the mobile phone and the large screen may establish the 2.4 GHz path on a channel C in the 2.4 GHz frequency band, and establish the 5 GHz path in the 5 GHz frequency band (for example, channel 149), to perform data interaction through the two paths. For a process of establishing the two paths, refer to any process in FIG. 13, FIG. 21, and FIG. 22. Details are not described herein again.

In a possible implementation, dual-path Wi-Fi connections may be established between the mobile phone and the AP, or between the large screen and the AP. The dual-path Wi-Fi connections between the mobile phone and the AP or between the large screen and the AP are inter-frequency paths. Using connection between the mobile phone and the AP as an example, the mobile phone has a dual Wi-Fi function, and may establish a 2.4 GHz Wi-Fi connection and a 5 GHz Wi-Fi connection to a dual-band integrated AP or two APs separately. In this scenario, if the mobile phone performs screen projection to the large screen, the mobile phone needs to disconnect from the Wi-Fi connecting to the AP. In an example, the two Wi-Fi connections between the mobile phone and the AP may include a primary connection path (for example, the 2.4 GHz connection is the primary connection path) and a secondary connection path (for example, the 5 GHz connection is the secondary connection path). After the mobile phone performs screen projection to the large screen, the secondary connection path is disconnected. In another example, after the mobile phone performs screen projection to the large screen, either of the two Wi-Fi connections may be disconnected. This is not limited in this application.

In a possible implementation, the large screen may determine, based on a specified detection condition, whether to establish a second screen projection path (for example, the 5 GHz path). For example, the specified detection condition may be that if a transmission delay of a data packet is greater than a threshold (for example, 150 ms), the large screen establishes the 5 GHz path with the mobile phone, to increase the data transmission delay.

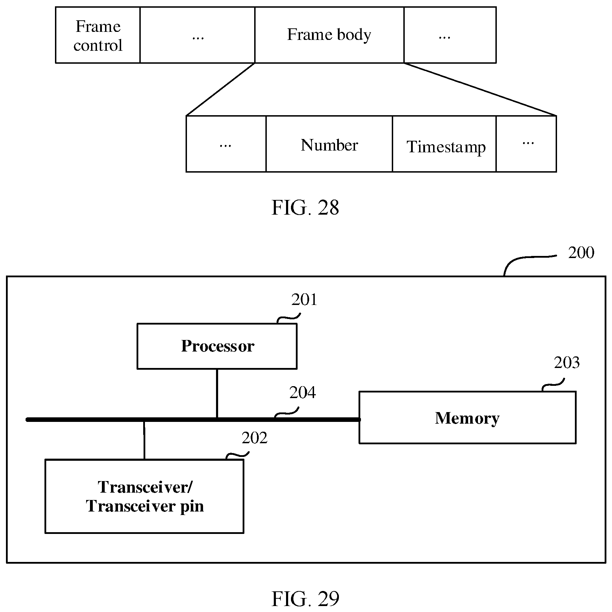

Optionally, a manner in which the large screen obtains the transmission delay of the data packet includes the following: Still using an image frame as an example, the mobile phone encapsulates the image frame to obtain an encapsulated data packet. FIG. 28 is a schematic diagram of an example format of a data packet. Referring to FIG. 28, for example, a frame body of the data packet may further include a timestamp in addition to the foregoing number. The timestamp is a system time corresponding to a moment at which the mobile phone encapsulates the data packet, or the timestamp may be a time relative to a screen projection start moment. This is not limited in this application. After receiving the data packet, the large screen parses the data packet to obtain information such as a number and a timestamp. The large screen may compare the timestamp in the data packet with a time at which the data packet is received, to obtain a transmission delay of the data packet.

It should be noted that the foregoing manner of setting a timestamp is specific for each data packet. In other words, each data packet corresponds to a timestamp, and the timestamp is an encapsulation time of the data packet. Optionally, the timestamp may alternatively be set for each image frame. For example, as described above, one image frame may be included in a plurality of data packets. Assuming that the image frame is included in data packet 1, data packet 2, and data packet 3, the timestamp is a moment at which the image frame starts to be encapsulated. Correspondingly, timestamps in the data packet 1, the data packet 2, and the data packet 3 are a same timestamp. It should be noted that, in this embodiment of the timestamp setting manner, a manner in which the large screen obtains the transmission delay of the data packet is as follows: The large screen obtains the data packet 1, the data packet 2, and the data packet 3, and parses the data packets 1 to 3 separately to obtain an I frame. The large screen may obtain, based on a moment of obtaining the I frame through parsing and a timestamp corresponding to the I frame (namely, the timestamp carried in the data packet 1, the data packet 2, or the data packet 3), a corresponding transmission delay.

It may be understood that, to implement the foregoing functions, the electronic device includes corresponding hardware and/or software modules for performing the functions. With reference to algorithm steps of examples described in embodiments disclosed in this specification, this application can be implemented in a form of hardware or a combination of hardware and computer software. Whether a function is performed by hardware or computer software driving hardware depends on particular applications and design constraints of the technical solutions. A person skilled in the art may use different methods to implement the described functions for each particular application with reference to embodiments, but it should not be considered that the implementation goes beyond the scope of this application.

In an example, FIG. 29 is a schematic block diagram of an apparatus 200 according to an embodiment of this application. The apparatus 200 may include a processor 201 and a transceiver/transceiver pin 202, and optionally, further include a memory 203.

Components of the apparatus 200 are coupled together through a bus 204. In addition to a data bus, the bus 204 further includes a power bus, a control bus, and a status signal bus. However, for clear description, various types of buses in the figure are referred as the bus 204.

Optionally, the memory 203 may be configured to store instructions in the foregoing method embodiments. The processor 201 may be configured to execute the instructions in the memory 203, control a receiving pin to receive a signal, and control a sending pin to send a signal.

The apparatus 200 may be the electronic device or a chip of the electronic device in the foregoing method embodiments.

All related content of each step in the foregoing method embodiments may be cited in function descriptions of a corresponding functional module. Details are not described herein again.

An embodiment further provides a computer storage medium. The computer storage medium stores computer instructions. When the computer instructions are run on an electronic device, the electronic device is enabled to perform the related method steps to implement the screen projection method in the foregoing embodiments.

An embodiment further provides a computer program product. When the computer program product runs on a computer, the computer is enabled to perform the related steps to implement the screen projection method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, so that the chip performs the screen projection method in the foregoing method embodiments.

The electronic device, computer storage medium, computer program product, or chip provided in embodiments is configured to perform the corresponding method provided above. Therefore, for beneficial effects that can be achieved, refer to the beneficial effects of the corresponding method provided above. Details are not described herein again.

Based on the descriptions of the foregoing implementations, a person skilled in the art may understand that, for convenience and conciseness of description, division into the functional modules is used as an example for illustration. In actual application, the foregoing functions may be allocated to and completed by different functional modules according to a requirement. In other words, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into the modules or units is merely a logical function division, and another division manner may be used during actual implementation. For example, a plurality of units or components may be combined, or may be integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on an actual requirement to achieve the objectives of the solutions of embodiments.

In addition, functional units in embodiments of this application may be integrated into one processing unit, each of the units may exist independently physically, or two or more units may be integrated into one unit. The integrated unit may be implemented in a form of hardware, or may be implemented in a form of a software functional unit.

Any content in embodiments of this application and any content in one embodiment can be freely combined. Any combination of the foregoing content is within the scope of this application.

When the integrated unit is implemented in the form of a software functional unit and sold or used as an independent product, the integrated unit may be stored in a readable storage medium. Based on such an understanding, the technical solutions of embodiments of this application essentially, or the part contributing to a conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make many modifications without departing from the purposes of this application and the protection scope of the claims, and all the modifications shall fall within the protection scope of this application.

Methods or algorithm steps described in combination with the content disclosed in embodiments of this application may be implemented by hardware, or may be implemented by a processor by executing software instructions. The software instructions may include a corresponding software module. The software module may be stored in a random access memory (Random Access Memory, RAM), a flash memory, a read-only memory (Read-Only Memory, ROM), an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be disposed in a network device. Certainly, the processor and the storage medium may exist in a network device as discrete components.

A person skilled in the art should be aware that in the foregoing one or more examples, functions described in embodiments of this application may be implemented by hardware, software, firmware, or any combination thereof. When the functions are implemented by software, the functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another. The storage medium may be any available medium accessible to a general-purpose or a dedicated computer.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make many modifications without departing from the purposes of this application and the protection scope of the claims, and all the modifications shall fall within the protection scope of this application.

## Claims

1. A screen projection method, applied to a first electronic device, wherein the method comprises:
establishing (201-217) a second Wi-Fi connection and a third Wi-Fi connection to a second electronic device in response to a detected user operation in a process of data exchange with a third electronic device through a first Wi-Fi connection, wherein the first Wi-Fi connection is established on a first channel in a first frequency band, the second Wi-Fi connection is established on a second channel in the first frequency band, the third Wi-Fi connection is established on a third channel in a second frequency band, the first frequency band is different from the second frequency band, and the first channel is different from the second channel; and
after establishing the second Wi-Fi connection and the third Wi-Fi connection to the second electronic device, performing (218) a screen projection service with the second electronic device through the second Wi-Fi connection and the third Wi-Fi connection:
wherein the performing a screen projection service with the second electronic device through the second Wi-Fi connection and the third Wi-Fi connection comprises:
generating a first data packet and a second data packet, wherein the first data packet and the second data packet carry same data; and
sending the first data packet to the second electronic device through the second Wi-Fi connection, and sending the second data packet to the second electronic device through the third Wi-Fi connection.

2. The method according to claim 1, wherein the establishing a second Wi-Fi connection and a third Wi-Fi connection to a second electronic device comprises:
after establishing the second Wi-Fi connection to the second electronic device, performing the screen projection service with the second electronic device through the second Wi-Fi connection; and
the third Wi-Fi connection to the second electronic device was established when communication quality of the second Wi-Fi connection did not meet a specified transmission condition.

3. The method according to claim 2, wherein the specified transmission condition comprises at least one of the following:
a transmission delay corresponding to the second Wi-Fi connection is less than a first threshold; and
a packet loss rate corresponding to the second Wi-Fi connection is less than a second threshold.

4. The method according to claim 1, wherein the performing a screen projection service with the second electronic device through the second Wi-Fi connection and the third Wi-Fi connection further comprises:
generating a third data packet and a fourth data packet, wherein the third data packet and the fourth data packet carry same data; and
sending the third data packet to the second electronic device through the second Wi-Fi connection, and sending the fourth data packet to the second electronic device through the third Wi-Fi connection.

5. The method according to claim 4, wherein
the first data packet and the second data packet each carry a first number, the third data packet and the fourth data packet each carry a second number, and the first number and the second number are adjacent numbers.

6. The method according to claim 1, wherein the performing a screen projection service with the second electronic device through the second Wi-Fi connection and the third Wi-Fi connection further comprises:
if it is detected that the second electronic device does not receive the first data packet and the second data packet, resending the first data packet to the second electronic device through the second Wi-Fi connection, and resending the second data packet to the second electronic device through the third Wi-Fi connection.

7. The method according to claim 1, wherein the performing a screen projection service with the second electronic device through the second Wi-Fi connection and the third Wi-Fi connection comprises:
displaying at least a part of an interface of the first electronic device on the second electronic device through the second Wi-Fi connection and the third Wi-Fi connection.

8. The method according to claim 1, wherein
the first electronic device is a mobile phone;
the second electronic device is Vision; and
the third electronic device is an access point AP, a router, or a mobile phone.

9. The method according to claim 1, wherein the establishing a second Wi-Fi connection and a third Wi-Fi connection to a second electronic device in response to a detected user operation in a process of data exchange with a third electronic device through a first Wi-Fi connection comprises:
exchanging data with the third electronic device through the first Wi-Fi connection and a fourth Wi-Fi connection, wherein the fourth Wi-Fi connection is established on a fourth channel in the second frequency band, and the third channel is different from the fourth channel; and
disconnecting the fourth Wi-Fi connection after establishing the second Wi-Fi connection and the third Wi-Fi connection to the second electronic device.

10. An electronic device, comprising:
a memory and a processor, wherein
the memory stores program instructions, and when the program instructions are executed by the processor, the electronic device is enabled to perform the following steps:
establishing a second Wi-Fi connection and a third Wi-Fi connection to a second electronic device in response to a detected user operation in a process of data exchange with a third electronic device through a first Wi-Fi connection, wherein the first Wi-Fi connection is established on a first channel in a first frequency band, the second Wi-Fi connection is established on a second channel in the first frequency band, the third Wi-Fi connection is established on a third channel in a second frequency band, the first frequency band is different from the second frequency band, and the first channel is different from the second channel; and
after establishing the second Wi-Fi connection and the third Wi-Fi connection to the second electronic device, performing a screen projection service with the second electronic device through the second Wi-Fi connection and the third Wi-Fi connection;
wherein when the program instructions are executed by the processor, the electronic device is enabled to perform the following steps:
generating a first data packet and a second data packet, wherein the first data packet and the second data packet carry same data; and
sending the first data packet to the second electronic device through the second Wi-Fi connection, and sending the second data packet to the second electronic device through the third Wi-Fi connection.

11. The device according to claim 10, wherein when the program instructions are executed by the processor, the electronic device is enabled to perform the following steps:
after establishing the second Wi-Fi connection to the second electronic device, performing the screen projection service with the second electronic device through the second Wi-Fi connection; and
the third Wi-Fi connection to the second electronic device was established when communication quality of the second Wi-Fi connection did not meet a specified transmission condition.

12. The device according to claim 11, wherein the specified transmission condition comprises at least one of the following:
a transmission delay corresponding to the second Wi-Fi connection is less than a first threshold; and
a packet loss rate corresponding to the second Wi-Fi connection is less than a second threshold.

13. The device according to claim 10, wherein when the program instructions are executed by the processor, the electronic device is enabled to perform the following steps:
generating a third data packet and a fourth data packet, wherein the third data packet and the fourth data packet carry same data; and
sending the third data packet to the second electronic device through the second Wi-Fi connection, and sending the fourth data packet to the second electronic device through the third Wi-Fi connection.

## Patentansprüche

1. Bildschirmprojektionsverfahren, das auf eine erste elektronische Vorrichtung angewendet wird, wobei das Verfahren Folgendes umfasst:
Herstellen (201-217) einer zweiten Wi-Fi-Verbindung und einer dritten Wi-Fi-Verbindung zu einer zweiten elektronischen Vorrichtung als Reaktion auf eine erkannte Benutzeroperation in einem Datenaustauschprozess mit einer dritten elektronischen Vorrichtung über eine erste Wi-Fi-Verbindung, wobei die erste Wi-Fi-Verbindung auf einem ersten Kanal in einem ersten Frequenzband hergestellt wird, die zweite Wi-Fi-Verbindung auf einem zweiten Kanal in dem ersten Frequenzband hergestellt wird, die dritte Wi-Fi-Verbindung auf einem dritten Kanal in einem zweiten Frequenzband hergestellt wird, das erste Frequenzband sich von dem zweiten Frequenzband unterscheidet und der erste Kanal sich von dem zweiten Kanal unterscheidet; und
nach dem Herstellen der zweiten Wi-Fi-Verbindung und der dritten Wi-Fi-Verbindung zu der zweiten elektronischen Vorrichtung, Durchführen (218) eines Bildschirmprojektionsdienstes mit der zweiten elektronischen Vorrichtung über die zweite Wi-Fi-Verbindung und die dritte Wi-Fi-Verbindung:
wobei das Durchführen eines Bildschirmprojektionsdienstes mit der zweiten elektronischen Vorrichtung über die zweite Wi-Fi-Verbindung und die dritte Wi-Fi-Verbindung Folgendes umfasst:
Erzeugen eines ersten Datenpakets und eines zweiten Datenpakets, wobei das erste Datenpaket und das zweite Datenpaket dieselben Daten enthalten; und
Senden des ersten Datenpakets an die zweite elektronische Vorrichtung über die zweite Wi-Fi-Verbindung und Senden des zweiten Datenpakets an die zweite elektronische Vorrichtung über die dritte Wi-Fi-Verbindung.

2. Verfahren nach Anspruch 1, wobei das Herstellen einer zweiten Wi-Fi-Verbindung und einer dritten Wi-Fi-Verbindung zu einer zweiten elektronischen Vorrichtung Folgendes umfasst:
nach dem Herstellen der zweiten Wi-Fi-Verbindung zu der zweiten elektronischen Vorrichtung, Durchführen des Bildschirmprojektionsdienstes mit der zweiten elektronischen Vorrichtung über die zweite Wi-Fi-Verbindung; und
die dritte Wi-Fi-Verbindung zu der zweiten elektronischen Vorrichtung hergestellt wurde, als die Kommunikationsqualität der zweiten Wi-Fi-Verbindung eine festgelegte Übertragungsbedingung nicht erfüllte.

3. Verfahren nach Anspruch 2, wobei die festgelegte Übertragungsbedingung mindestens eine der Folgenden umfasst:
eine Übertragungsverzögerung, die der zweiten Wi-Fi-Verbindung entspricht, ist kleiner als ein erster Schwellenwert; und
eine Paketverlustrate, die der zweiten Wi-Fi-Verbindung entspricht, ist kleiner als ein zweiter Schwellenwert.

4. Verfahren nach Anspruch 1, wobei das Durchführen eines Bildschirmprojektionsdienstes mit der zweiten elektronischen Vorrichtung über die zweite Wi-Fi-Verbindung und die dritte Wi-Fi-Verbindung ferner Folgendes umfasst:
Erzeugen eines dritten Datenpakets und eines vierten Datenpakets, wobei das dritte Datenpaket und das vierte Datenpaket dieselben Daten enthalten; und
Senden des dritten Datenpakets an die zweite elektronische Vorrichtung über die zweite Wi-Fi-Verbindung und Senden des vierten Datenpakets an die zweite elektronische Vorrichtung über die dritte Wi-Fi-Verbindung.

5. Verfahren nach Anspruch 4, wobei
das erste Datenpaket und das zweite Datenpaket jeweils eine erste Zahl enthalten, das dritte Datenpaket und das vierte Datenpaket jeweils eine zweite Zahl enthalten und die erste Zahl und die zweite Zahl benachbarte Zahlen sind.

6. Verfahren nach Anspruch 1, wobei das Durchführen eines Bildschirmprojektionsdienstes mit der zweiten elektronischen Vorrichtung über die zweite Wi-Fi-Verbindung und die dritte Wi-Fi-Verbindung ferner Folgendes umfasst:
wenn erkannt wird, dass die zweite elektronische Vorrichtung das erste Datenpaket und das zweite Datenpaket nicht empfängt, erneutes Senden des ersten Datenpakets an die zweite elektronische Vorrichtung über die zweite Wi-Fi-Verbindung und erneutes Senden des zweiten Datenpakets an die zweite elektronische Vorrichtung über die dritte Wi-Fi-Verbindung.

7. Verfahren nach Anspruch 1, wobei das Durchführen eines Bildschirmprojektionsdienstes mit der zweiten elektronischen Vorrichtung über die zweite Wi-Fi-Verbindung und die dritte Wi-Fi-Verbindung Folgendes umfasst:
Anzeigen zumindest eines Teils einer Schnittstelle der ersten elektronischen Vorrichtung auf der zweiten elektronischen Vorrichtung über die zweite Wi-Fi-Verbindung und die dritte Wi-Fi-Verbindung.

8. Verfahren nach Anspruch 1, wobei
die erste elektronische Vorrichtung ein Mobiltelefon ist;
die zweite elektronische Vorrichtung Vision ist; und
die dritte elektronische Vorrichtung ein Access Point, AP, ein Router oder ein Mobiltelefon ist.

9. Verfahren nach Anspruch 1, wobei das Herstellen einer zweiten Wi-Fi-Verbindung und einer dritten Wi-Fi-Verbindung zu einer zweiten elektronischen Vorrichtung als Reaktion auf eine erkannte Benutzeroperation in einem Datenaustauschprozess mit einer dritten elektronischen Vorrichtung über eine erste Wi-Fi-Verbindung Folgendes umfasst:
Austauschen von Daten mit der dritten elektronischen Vorrichtung über die erste Wi-Fi-Verbindung und eine vierte Wi-Fi-Verbindung, wobei die vierte Wi-Fi-Verbindung auf einem vierten Kanal in dem zweiten Frequenzband hergestellt wird und der dritte Kanal sich von dem vierten Kanal unterscheidet; und
Trennen der vierten Wi-Fi-Verbindung nach dem Herstellen der zweiten Wi-Fi-Verbindung und der dritten Wi-Fi-Verbindung zu der zweiten elektronischen Vorrichtung.

10. Elektronische Vorrichtung, umfassend:
einen Speicher und einen Prozessor, wobei
der Speicher Programmanweisungen speichert und, wenn die Programmanweisungen durch den Prozessor ausgeführt werden, die elektronische Vorrichtung in die Lage versetzt wird, die folgenden Schritte durchzuführen:
Herstellen einer zweiten Wi-Fi-Verbindung und einer dritten Wi-Fi-Verbindung zu einer zweiten elektronischen Vorrichtung als Reaktion auf eine erkannte Benutzeroperation in einem Datenaustauschprozess mit einer dritten elektronischen Vorrichtung über eine erste Wi-Fi-Verbindung, wobei die erste Wi-Fi-Verbindung auf einem ersten Kanal in einem ersten Frequenzband hergestellt wird, die zweite Wi-Fi-Verbindung auf einem zweiten Kanal in dem ersten Frequenzband hergestellt wird, die dritte Wi-Fi-Verbindung auf einem dritten Kanal in einem zweiten Frequenzband hergestellt wird, das erste Frequenzband sich von dem zweiten Frequenzband unterscheidet und der erste Kanal sich von dem zweiten Kanal unterscheidet; und
nach dem Herstellen der zweiten Wi-Fi-Verbindung und der dritten Wi-Fi-Verbindung zu der zweiten elektronischen Vorrichtung, Durchführen eines Bildschirmprojektionsdienstes mit der zweiten elektronischen Vorrichtung über die zweite Wi-Fi-Verbindung und die dritte Wi-Fi-Verbindung;
wobei, wenn die Programmanweisungen durch den Prozessor ausgeführt werden, die elektronische Vorrichtung in die Lage versetzt wird, die folgenden Schritte durchzuführen:
Erzeugen eines ersten Datenpakets und eines zweiten Datenpakets, wobei das erste Datenpaket und das zweite Datenpaket dieselben Daten enthalten; und
Senden des ersten Datenpakets an die zweite elektronische Vorrichtung über die zweite Wi-Fi-Verbindung und Senden des zweiten Datenpakets an die zweite elektronische Vorrichtung über die dritte Wi-Fi-Verbindung.

11. Vorrichtung nach Anspruch 10, wobei, wenn die Programmanweisungen durch den Prozessor ausgeführt werden, die elektronische Vorrichtung in die Lage versetzt wird, die folgenden Schritte durchzuführen:
nach dem Herstellen der zweiten Wi-Fi-Verbindung zu der zweiten elektronischen Vorrichtung, Durchführen des Bildschirmprojektionsdienstes mit der zweiten elektronischen Vorrichtung über die zweite Wi-Fi-Verbindung; und
die dritte Wi-Fi-Verbindung zu der zweiten elektronischen Vorrichtung hergestellt wurde, als die Kommunikationsqualität der zweiten Wi-Fi-Verbindung eine festgelegte Übertragungsbedingung nicht erfüllte.

12. Vorrichtung nach Anspruch 11, wobei die festgelegte Übertragungsbedingung mindestens eine der Folgenden umfasst:
eine Übertragungsverzögerung, die der zweiten Wi-Fi-Verbindung entspricht, ist kleiner als ein erster Schwellenwert; und
eine Paketverlustrate, die der zweiten Wi-Fi-Verbindung entspricht, ist kleiner als ein zweiter Schwellenwert.

13. Vorrichtung nach Anspruch 10, wobei, wenn die Programmanweisungen durch den Prozessor ausgeführt werden, die elektronische Vorrichtung in die Lage versetzt wird, die folgenden Schritte durchzuführen:
Erzeugen eines dritten Datenpakets und eines vierten Datenpakets, wobei das dritte Datenpaket und das vierte Datenpaket dieselben Daten enthalten; und
Senden des dritten Datenpakets an die zweite elektronische Vorrichtung über die zweite Wi-Fi-Verbindung und Senden des vierten Datenpakets an die zweite elektronische Vorrichtung über die dritte Wi-Fi-Verbindung.

## Revendications

1. Procédé de projection d'écran, appliqué à un premier dispositif électronique, dans lequel le procédé comprend :
l'établissement (201-217) d'une deuxième connexion Wi-Fi et d'une troisième connexion Wi-Fi à un deuxième dispositif électronique en réponse à une opération utilisateur détectée dans un processus d'échange de données avec un troisième dispositif électronique via une première connexion Wi-Fi, dans lequel la première connexion Wi-Fi est établie sur un premier canal dans une première bande de fréquences, la deuxième connexion Wi-Fi est établie sur un deuxième canal dans la première bande de fréquences, la troisième connexion Wi-Fi est établie sur un troisième canal dans une seconde bande de fréquences, la première bande de fréquences est différente de la seconde bande de fréquences, et le premier canal est différent du deuxième canal ; et
après l'établissement de la deuxième connexion Wi-Fi et de la troisième connexion Wi-Fi au deuxième dispositif électronique, la réalisation (218) d'un service de projection d'écran avec le deuxième dispositif électronique via la deuxième connexion Wi-Fi et la troisième connexion Wi-Fi :
dans lequel la réalisation d'un service de projection d'écran avec le deuxième dispositif électronique via la deuxième connexion Wi-Fi et la troisième connexion Wi-Fi comprend :
la génération d'un premier paquet de données et d'un deuxième paquet de données, dans lequel le premier paquet de données et le deuxième paquet de données contiennent les mêmes données ; et
l'envoi du premier paquet de données au deuxième dispositif électronique via la deuxième connexion Wi-Fi, et l'envoi du deuxième paquet de données au deuxième dispositif électronique via la troisième connexion Wi-Fi.

2. Procédé selon la revendication 1, dans lequel l'établissement d'une deuxième connexion Wi-Fi et d'une troisième connexion Wi-Fi à un deuxième dispositif électronique comprend :
après l'établissement de la deuxième connexion Wi-Fi au deuxième dispositif électronique, la réalisation du service de projection d'écran avec le deuxième dispositif électronique via la deuxième connexion Wi-Fi ; et
la troisième connexion Wi-Fi au deuxième dispositif électronique a été établie lorsque la qualité de communication de la deuxième connexion Wi-Fi ne répondait pas à une condition de transmission spécifiée.

3. Procédé selon la revendication 2, dans lequel la condition de transmission spécifiée comprend au moins l'un des éléments suivants :
un délai de transmission correspondant à la deuxième connexion Wi-Fi est inférieur à un premier seuil ; et
un taux de perte de paquets correspondant à la deuxième connexion Wi-Fi est inférieur à un second seuil.

4. Procédé selon la revendication 1, dans lequel la réalisation d'un service de projection d'écran avec le deuxième dispositif électronique via la deuxième connexion Wi-Fi et la troisième connexion Wi-Fi comprend également :
la génération d'un troisième paquet de données et d'un quatrième paquet de données, dans lequel le troisième paquet de données et le quatrième paquet de données contiennent les mêmes données ; et
l'envoi du troisième paquet de données au deuxième dispositif électronique via la deuxième connexion Wi-Fi, et l'envoi du quatrième paquet de données au deuxième dispositif électronique via la troisième connexion Wi-Fi.

5. Procédé selon la revendication 4, dans lequel
le premier paquet de données et le deuxième paquet de données contiennent chacun un premier numéro, le troisième paquet de données et le quatrième paquet de données contiennent chacun un second numéro, et le premier numéro et le second numéro sont des numéros adjacents.

6. Procédé selon la revendication 1, dans lequel la réalisation d'un service de projection d'écran avec le deuxième dispositif électronique via la deuxième connexion Wi-Fi et la troisième connexion Wi-Fi comprend également :
s'il est détecté que le deuxième dispositif électronique ne reçoit pas le premier paquet de données et le deuxième paquet de données, le renvoi du premier paquet de données au deuxième dispositif électronique via la deuxième connexion Wi-Fi, et le renvoi du deuxième paquet de données au deuxième dispositif électronique via la troisième connexion Wi-Fi.

7. Procédé selon la revendication 1, dans lequel la réalisation d'un service de projection d'écran avec le deuxième dispositif électronique via la deuxième connexion Wi-Fi et la troisième connexion Wi-Fi comprend :
l'affichage d'au moins une partie d'une interface du premier dispositif électronique sur le deuxième dispositif électronique via la deuxième connexion Wi-Fi et la troisième connexion Wi-Fi.

8. Procédé selon la revendication 1, dans lequel
le premier dispositif électronique est un téléphone portable ;
le deuxième dispositif électronique est Vision ; et
le troisième dispositif électronique est un point d'accès AP, un routeur, ou un téléphone mobile.

9. Procédé selon la revendication 1, dans lequel l'établissement d'une deuxième connexion Wi-Fi et d'une troisième connexion Wi-Fi à un deuxième dispositif électronique, en réponse à une opération utilisateur détectée dans un processus d'échange de données avec un troisième dispositif électronique via une première connexion Wi-Fi, comprend :
l'échange de données avec le troisième dispositif électronique via la première connexion Wi-Fi et une quatrième connexion Wi-Fi, dans lequel la quatrième connexion Wi-Fi est établie sur un quatrième canal dans la seconde bande de fréquences, et le troisième canal est différent du quatrième canal ; et
la déconnexion de la quatrième connexion Wi-Fi après l'établissement de la deuxième connexion Wi-Fi et de la troisième connexion Wi-Fi au deuxième dispositif électronique.

10. Dispositif électronique, comprenant :
une mémoire et un processeur, dans lequel
la mémoire stocke des instructions de programme, et lorsque les instructions de programme sont exécutées par le processeur, le dispositif électronique est activé pour réaliser les étapes suivantes :
l'établissement d'une deuxième connexion Wi-Fi et d'une troisième connexion Wi-Fi à un deuxième dispositif électronique en réponse à une opération utilisateur détectée dans un processus d'échange de données avec un troisième dispositif électronique via une première connexion Wi-Fi, dans lequel la première connexion Wi-Fi est établie sur un premier canal dans une première bande de fréquences, la deuxième connexion Wi-Fi est établie sur un deuxième canal dans la première bande de fréquences, la troisième connexion Wi-Fi est établie sur un troisième canal dans une seconde bande de fréquences, la première bande de fréquences est différente de la seconde bande de fréquences, et le premier canal est différent du deuxième canal ; et
après l'établissement de la deuxième connexion Wi-Fi et de la troisième connexion Wi-Fi au deuxième dispositif électronique, la réalisation d'un service de projection d'écran avec le deuxième dispositif électronique via la deuxième connexion Wi-Fi et la troisième connexion Wi-Fi ;
dans lequel lorsque les instructions de programme sont exécutées par le processeur, le dispositif électronique est activé pour réaliser les étapes suivantes :
la génération d'un premier paquet de données et d'un deuxième paquet de données, dans lequel le premier paquet de données et le deuxième paquet de données contiennent les mêmes données ; et l'envoi du premier paquet de données au deuxième dispositif électronique via la deuxième connexion Wi-Fi, et l'envoi du deuxième paquet de données au deuxième dispositif électronique via la troisième connexion Wi-Fi.

11. Dispositif selon la revendication 10, dans lequel, lorsque les instructions de programme sont exécutées par le processeur, le dispositif électronique est activé pour réaliser les étapes suivantes :
après l'établissement de la deuxième connexion Wi-Fi au deuxième dispositif électronique, la réalisation du service de projection d'écran avec le deuxième dispositif électronique via la deuxième connexion Wi-Fi ; et
la troisième connexion Wi-Fi au deuxième dispositif électronique a été établie lorsque la qualité de communication de la deuxième connexion Wi-Fi ne répondait pas à une condition de transmission spécifiée.

12. Dispositif selon la revendication 11, dans lequel la condition de transmission spécifiée comprend au moins l'un des éléments suivants :
un délai de transmission correspondant à la deuxième connexion Wi-Fi est inférieur à un premier seuil ; et
un taux de perte de paquets correspondant à la deuxième connexion Wi-Fi est inférieur à un second seuil.

13. Dispositif selon la revendication 10, dans lequel, lorsque les instructions de programme sont exécutées par le processeur, le dispositif électronique est activé pour réaliser les étapes suivantes :
la génération d'un troisième paquet de données et d'un quatrième paquet de données, dans lequel le troisième paquet de données et le quatrième paquet de données contiennent les mêmes données ; et
l'envoi du troisième paquet de données au deuxième dispositif électronique via la deuxième connexion Wi-Fi, et l'envoi du quatrième paquet de données au deuxième dispositif électronique via la troisième connexion Wi-Fi.
